# EUROPEAN PATENT APPLICATION

(11) **EP 4 738 895 A1**
(43) Date of publication of application: **06.05.2026**
(21) Application number: 25783911.8
(22) Date of filing: 05.09.2025
(51) Int. Cl.: H04W 4/08

(54) **ELECTRONIC DEVICE FOR CARRYING OUT SHORT-RANGE WIRELESS COMMUNICATION WITH PLURALITY OF EXTERNAL ELECTRONIC DEVICES, AND OPERATING METHOD OF ELECTRONIC DEVICE**

(30) Priority: 13.09.2024 KR 20240125766; 17.10.2024 KR 20240141995
(71) Applicant: SAMSUNG ELECTRONICS CO., LTD., Yeongtong-gu Suwon-si, Gyeonggi-do 16677 (KR)
(72) Inventor: JUNG, Buseop, Suwon-si, Gyeonggi-do 16677 (KR); LEE, Sunkee, Suwon-si, Gyeonggi-do 16677 (KR)
(74) Representative: HGF
(86) International application number: PCT/KR2025/013820
(87) International publication number: WO 2026/059240

(57) **Abstract**

An electronic device and a method of operating the electronic device according to an embodiment may include a communication circuit configured to support short-range wireless communication. The electronic device may include memory configured to store one or more computer programs. The electronic device may include at least one processor. The one or more computer programs may include instructions that, when executed individually or collectively by the at least one processor, cause the electronic device to transmit data to a first external electronic device belonging to a first group including the electronic device and the first external electronic device via the short-range wireless communication and/or receive data from a second external electronic device belonging to a second group including the electronic device and the second external electronic device via the short-range wireless communication. The instructions may cause, when executed individually or collectively by the at least one processor, the electronic device to detect activation of a service performed by a third external electronic device and the electronic device. The instructions may cause, when executed individually or collectively by the at least one processor, the electronic device to, based on capability information of the communication circuit and a characteristic of the service, determine whether to join a third group generated by the third external electronic device. The instructions may cause, when executed individually or collectively by the at least one processor, the electronic device to, based on determination to join the third group, join the third group while a state where the electronic device belongs to the first group and the second group is maintained.

## Description

### [Technical Field]

The disclosure relates to an electronic device and a method of operating the electronic device, and an electronic device for performing short-range wireless communication with a plurality of external electronic devices.

### [Background Art]

A speed of wireless communication which can be used by electronic devices has been improved. Among recent wireless communication supported by electronic devices, IEEE 802.11 WLAN (or Wi-Fi) is the standard for implementing a highspeed wireless connection between various electronic devices. Initially implemented Wi-Fi supported a maximum of transmission speed of 1 to 9 Mbps, but Wi-Fi 6 technology (or IEEE 802.11 ax) may support a maximum of transmission speed of about 10 Gbps.

An electronic device may support various services (for example, a UHD video streaming service, an augmented reality (AR) service, a virtual reality (VR) service, or a mixed reality (MR) service) using relatively large data through wireless communication supporting a high transmission speed and also support various other services.

An electronic device may be connected to an external electronic device through short-range wireless communication without passing through an access point (AP) defined in IEEE 802.11. The external electronic device and the electronic device may transmit and/or receive data through a direct connection between devices (device to device (D2D)) without passing through the AP.

An electronic device may be connected to a plurality of external electronic devices without passing through an AP and transmit and/or receive data. The electronic device may transmit and/or receive data to and/or from a plurality of external electronic devices through Wi-Fi direct technology without passing through the AP. Wi-Fi direct defines a group including two or more electronic devices for communication between devices and defines a group owner (GO) for controlling a group and a group client (GC) participating in a group to transmit and/or receive data.

A manufacturer that produces electronic devices supporting Wi-Fi direct may configure an electronic device for transmitting data to an electronic device included in a group as the GO and configure an electronic device receiving data as the GC.

### [Disclosure of Invention]

### [Technical Problem]

When an electronic device transmits data to a first external electronic device through Wi-Fi direct, a service or operation using short-range wireless communication may be configured to make the electronic device and the first external electronic device be included in one group. The electronic device transmitting data may operate as a group owner (GP) within the group, and the first external electronic device receiving data may operate as a group client (GC) within the group.

The electronic device may receive a data reception request from a second external electronic device while transmitting data to the first external electronic device. The electronic device may join another group in which the second external electronic device operates as the GO. The electronic device may operate as the GC of the other group.

When the electronic device supports a dual P2P mode corresponding to a mode in which the electronic device performs D2D communication with two external electronic devices, the electronic device may belong to a maximum of two groups in implementation. When the electronic device receives a data reception request from a third external electronic device, the electronic device may not join a group generated by the third external electronic device. In order to transmit data to the electronic device, the third external electronic device may join another group in which the second external electronic device transmitting data to the electronic device operates as the GO, so as to transmit data to the electronic device. However, after completing data transmission, the second external electronic device transmitting data to the electronic device may dissolve the group and may not transmit data to the electronic device due to the dissolution of the group.

The technical subjects pursued in the disclosure are not limited to the above-mentioned technical subjects, and other technical subjects which are not mentioned herein may be clearly understood through the following description by those skilled in the art to which the disclosure pertains.

### [Solution to Problem]

An electronic device according to an embodiment may include a communication circuit configured to support short-range wireless communication. The electronic device may include memory configured to store one or more computer programs. The electronic device may include at least one processor. The one or more computer programs may include instructions that, when executed individually or collectively by the at least one processor, cause the electronic device to transmit data to a first external electronic device belonging to a first group including the electronic device and the first external electronic device via the short-range wireless communication and/or receive data from a second external electronic device belonging to a second group including the electronic device and the second external electronic device via the short-range wireless communication. The instructions may cause, when executed individually or collectively by the at least one processor, the electronic device to detect activation of a service performable by a third external electronic device and the electronic device. The instructions may cause, when executed individually or collectively by the at least one processor, the electronic device to, based on capability information of the communication circuit and a characteristic of the service, determine whether to join a third group generated by the third external electronic device. The instructions may cause, when executed individually or collectively by the at least one processor, the electronic device to, based on determination to join the third group, join the third group while a state where the electronic device belongs to the first group and the second group is maintained.

A recording medium storing at least one program including instructions that, when executed individually or collectively by at least one processor of an electronic device according to an embodiment, cause the electronic device to perform operations may be provided. The instructions may cause, when executed individually or collectively by the at least one processor, the electronic device to transmit data to a first external electronic device belonging to a first group including the electronic device and the first external electronic device and/or receive data from a second external electronic device belonging to a second group including the electronic device and the second external electronic device. The instructions may cause, when executed individually or collectively by the at least one processor, the electronic device to detect activation of a service performable by a third external electronic device and the electronic device. The instructions may cause, when executed individually or collectively by the at least one processor, the electronic device to, based on capability information of a communication circuit and a characteristic of the service, determine whether to join a third group generated by the third external electronic device. The instructions may cause, when executed individually or collectively by the at least one processor, the electronic device to, based on determination to join the third group, join the third group while a state where the electronic device belongs to the first group and the second group is maintained.

A method of operating an electronic device according to an embodiment may include an operation of transmitting data to a first external electronic device belonging to a first group including the electronic device and the first external electronic device via the short-range wireless communication and/or receiving data from a second external electronic device belonging to a second group including the electronic device and the second external electronic device via the short-range wireless communication. The method of operating the electronic device may include an operation of detecting activation of a service performable by a third external electronic device and the electronic device. The method of operating the electronic device may include an operation of, based on capability information of the communication circuit and a characteristic of the service, determining whether to join a third group generated by the third external electronic device. The method of operating the electronic device may include an operation of, based on determination to join the third group, joining the third group while a state where the electronic device belongs to the first group and the second group is maintained.

### [Advantageous Effects of invention]

In an electronic device and a method of operating the electronic device according to various embodiments of the disclosure, when the electronic device detects activation of a service performed by a third external electronic device and the electronic device while the electronic device operates as a GO of a first group and operates as a GC of a second group, the electronic device may determine whether to join a third group generated by the third external electronic device, based on a characteristic of the service and capability information of a communication circuit. When the electronic device and the third external electronic device may be connected through short-range wireless communication and perform a service in which the third external electronic device transmits data to the electronic device, the electronic device may determine to join the third group. The third group may be maintained regardless of dissolution of the first group and the second group. Accordingly, the electronic device may stably receive data from the third external electronic device.

Advantageous effects obtainable from the disclosure are not limited to the above-described effects, and other effects which are mentioned herein may be clearly understood through the following description by those skilled in the art to which the disclosure pertains.

### [Brief Description of Drawings]

FIG. 1 is a block diagram of an electronic device according to an embodiment.
FIG. 2A is a diagram illustrating an example in which the electronic device performs short-range wireless communication with a first external electronic device and a second external electronic device according to an embodiment.
FIG. 2B is a diagram illustrating an example in which the electronic device is connected to a third external electronic device through short-range wireless communication in the state where the electronic device performs short-range wireless communication with the first external electronic device and the second external electronic device according to an embodiment.
FIG. 3 is a block diagram of the electronic device according to an embodiment.
FIG. 4A is a diagram illustrating an example in which the electronic device performs short-range wireless communication with the first external electronic device and the second external electronic device according to an embodiment.
FIG. 4B is a diagram illustrating an example in which the electronic device performs short-range wireless communication with the first external electronic device, the second external electronic device, and the third external electronic device according to an embodiment.
FIG. 4C is a diagram illustrating an example in which the electronic device performs short-range wireless communication with the first external electronic device, the second external electronic device, and the third external electronic device according to an embodiment.
FIG. 4D is a diagram illustrating an example in which the electronic device performs short-range wireless communication with the first external electronic device, the second external electronic device, the third external electronic device, and a fourth external electronic device according to an embodiment.
FIG. 4E is a diagram illustrating an example in which the electronic device performs short-range wireless communication with the first external electronic device and a fifth external electronic device according to an embodiment.
FIG. 5 illustrates an example in which the electronic device determines whether to join a third group, based on capability information of the communication circuit and a characteristic of the service performed with the third external electronic device according to an embodiment.
FIG. 6A and FIG. 6B are diagrams illustrating an example in which the electronic device performs short-range wireless communication according to an embodiment of the disclosure.
FIG. 7 is a flowchart illustrating a method of operating the electronic device according to an embodiment.

### [Mode for the Invention]

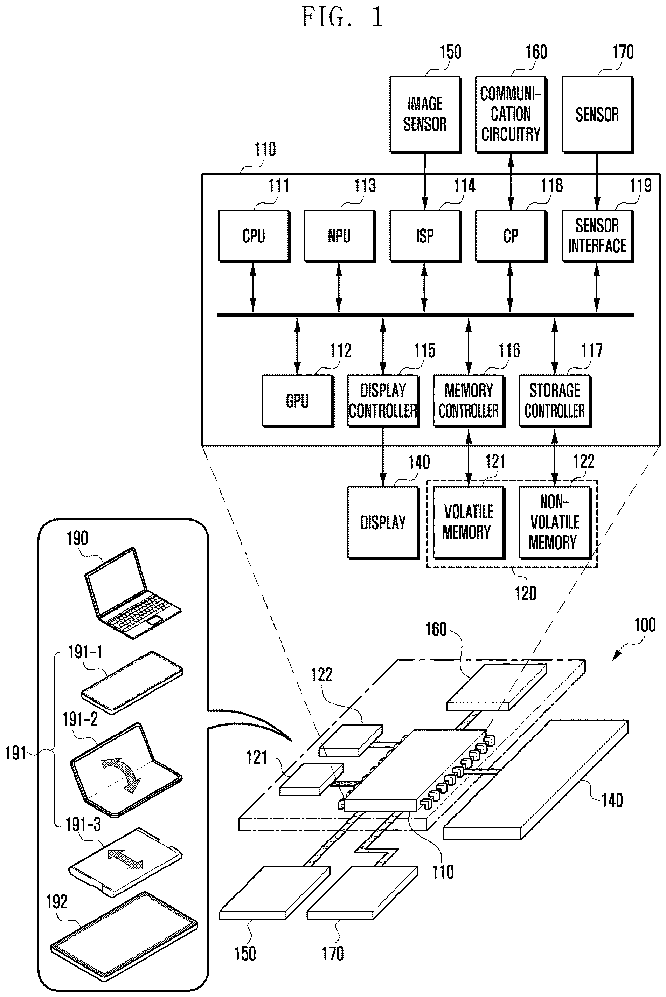

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semipermanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

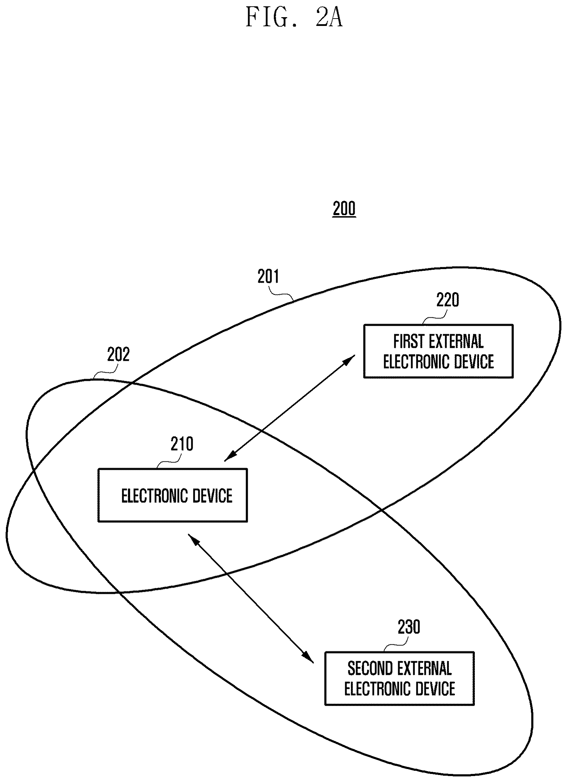

FIG. 2A is a diagram illustrating an example in which am electronic device performs short-range wireless communication with a first external electronic device and a second external electronic device according to an embodiment.

Referring to FIG. 2A, a WLAN system 200 may include an electronic device 210 (for example, the electronic device 100 of FIG. 1), a first external electronic device 220, and/or a second external electronic device 230. For example, the first external electronic device 220 and/or the second external electronic device 230 may include the same component as the electronic device 100 of FIG. 1. An external electronic device may refer to an electronic device other than the electronic device 100.

The electronic device 210 may perform short-range wireless communication with the first external electronic device 220 and/or the second external electronic device 230 through short-range wireless communication. The short-range wireless communication may include Wi-Fi defined in IEEE 802.11. The electronic device 210 may be connected to the first external electronic device 220 and/or the second external electronic device 230 through short-range wireless communication without passing through a separate entity (for example, an access point (AP) defined in IEEE 802.11).

The electronic device 210 and the first external electronic device 220 may perform device to device communication (D2D communication) using short-range wireless communication without passing through the AP. The electronic device 210 and the first external electronic device 220 may generate at least one group (for example, a first group 201 or first device group 201) for performing short-range wireless communication. The electronic device 210 and the first external electronic device 220 belonging to the first group 201 may each serve as one of a group owner that serves to manage (i.e. manages) a group through negotiation or a group client (GC) that performs short-range wireless communication, based on the control of the GO within the group.

According to an embodiment, the electronic device 210 and the first external electronic device 220 may perform GO negotiation as one procedure among the procedures for configuring (or generating) the first group 201. Based on the GO negotiation, one of the electronic device 210 and the first external electronic device 220 may operate as the GO, and the other one may operate as the GC.

According to an embodiment, the electronic device 210 and the first external electronic device 220 do not perform the GO negotiation, and the device (for example, the electronic device 210) generating the group may serve as the GO. A mode in which the device generating the group serves as the GO may be referred to as an autonomous GO mode.

According to an embodiment, the electronic device 210 and the first external electronic device 220 may perform a data (or file) sharing service using short-range wireless communication. When the electronic device 210 transmits data to the first external electronic device 220 and the first external electronic device 220 receives data from the electronic device 210, the electronic device 210 may operate as the GO and the first external electronic device 220 may operate as the GC. The electronic device 210 may dissolve the first group 201 as the data transmission is completed.

The electronic device 210 and the second external electronic device 230 may perform device to device communication (D2D communication) using short-range wireless communication without passing through the AP. The electronic device 210 and the second external electronic device 230 may generate at least one group (for example, a second group 202 or second device group 202) for performing short-range wireless communication. The electronic device 210 and the second external electronic device 230 belonging to the second group 202 may each serve as one of a group owner that serves to manage (i.e. manages) a group through negotiation or a group client (GC) that performs short-range wireless communication, based on the control of the GO within the group.

According to an embodiment, the electronic device 210 and the second external electronic device 230 may perform GO negotiation as one procedure among the procedures for configuring (or generating) the second group 202. Based on the GO negotiation, one of the electronic device 210 and the second external electronic device 230 may operate as the GO, and the other one may operate as the GC.

According to an embodiment, the electronic device 210 and the second external electronic device 230 do not perform the GO negotiation, and the device (for example, the second external electronic device 230) generating the group may serve as the GO. A mode in which the device generating the group serves as the GO may be referred to as an autonomous GO mode.

According to an embodiment, the electronic device 210 and the second external electronic device 230 may perform a data (or file) sharing service using short-range wireless communication. When the electronic device 210 receives data from the second external electronic device 230 and the second external electronic device 230 transmits data to the electronic device 210, the electronic device 210 may operate as the GC and the second external electronic device 230 may operate as the GO. The second external electronic device 230 may dissolve the second group 202 as the data transmission is completed.

The electronic device 210, the first external electronic device 220, and/or the second external electronic device 230 supporting D2D communication of short-range wireless communication may generate a maximum of two groups. When the electronic device 210 should perform short-range wireless communication with external electronic devices different from the first external electronic device 220 and the second external electronic device 230, the electronic device may perform short-range wireless communication with the other external electronic devices only when the other external electronic devices joins one of the already generated two groups.

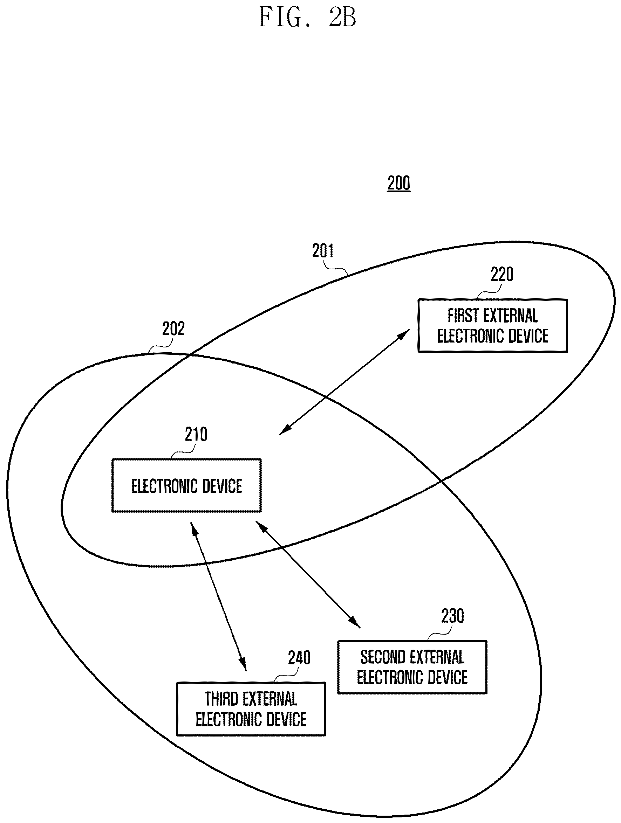

FIG. 2B is a diagram illustrating an example in which the electronic device is connected to a third external electronic device through short-range wireless communication in the state where the electronic device performs short-range wireless communication with the first external electronic device and the second external electronic device according to an embodiment.

The electronic device 210 and the first external electronic device 220 may belong to the first group 201 and may perform short-range wireless communication. According to an embodiment, the electronic device 210 may transmit data to the first external electronic device 220 and may operate as a group owner (GO) of the first group 201. The first external electronic device 220 may receive data from the electronic device 210 and may operate as a group client (GC) of the first group 201.

The electronic device 210 and the second external electronic device 230 may belong to the second group 202 and may perform short-range wireless communication. According to an embodiment, the electronic device 210 may receive data from the second external electronic device 230 and may operate as a group client (GC) of the second group 202. The second external electronic device 230 may transmit data to the electronic device 210 and may operate as a group owner (GO) of the second group 202.

The electronic device 210 may detect activation of a service using short-range wireless communication between the electronic device 210 and the third external electronic device 240. According to an embodiment, the service using the short-range wireless communication may include at least one of a content (or data or file) sharing service or a multi-device environment (MDF) support service. The third external electronic device 240 may transmit a connection request message to the electronic device 210 to transmit data to the electronic device 210, and the electronic device 210 may detect activation of the service using the short-range wireless communication between the electronic device 210 and the third external electronic device 240 by receiving the connection request message through various schemes (for example, short-range wireless communication or short-range wireless communication (out-of band (OOB)) different from the short-range wireless communication).

According to an embodiment, the electronic device 210 may operate as the GO of the first group 201 and the GC of the second group 202 and may have difficulty in generating or joining more groups in implementation. The third external electronic device 240 may join the second group 202 in which the electronic device 210 operates as the GC. The third external electronic device 240 may perform a series of operations with the second external electronic device 230 operating as the GO in the second group 202 in order to join the second group 202. The third external electronic device 240 may receive a signal (for example, a beacon signal) transmitted by the second external electronic device 230 operating as the GO and identify that the electronic device 210 operates as the GC of the second group 202, based on information on the electronic device 210 included in the signal. The third external electronic device 240 may join the second group 202 in order to transmit data to the electronic device 210. According to another embodiment, the third external electronic device 240 may identify that the electronic device 210 is operating as the GC of the second group 202 by using various protocols (for example, universal plug and play (uPnP) or multicast domain name service (MDNS)).

The electronic device 210 and the third external electronic device 240 may perform short-range wireless communication through a frequency band (or channel) configured in the second group 202 while operating as the GC of the second group 202. However, the second external electronic device 230 may have difficulty in identifying whether communication is performed between entities (for example, the electronic device 210 and the third external electronic device 240) operating as the GC of the second group 202. The second external electronic device 230 may dissolve the second group 202 as the data transmission to the electronic device 210 is completed, e.g. when the transmission of data from the second external electronic device 230 to the electronic device 210 is completed and/or before or during transmission of data from the third external electronic device 240 to the electronic device 210. The electronic device 210 and the second external electronic device 230 may stop performing short-range wireless communication as the second group 202 is dissolved. As a result, the third external electronic device 240 may not be able to transmit data to the electronic device 210 in the second group 202.

Such a phenomenon may be generated due to implementation in which the electronic device 210 generates and/or join a maximum of two groups. Hereinafter, examples are described in which the electronic device 210 prevents the phenomenon by joining a third group generated by the third external electronic device 230, based on capability information of a communication circuit of the electronic device 210 and/or a characteristic of the service performed by the electronic device 210 and the third external electronic device 230.

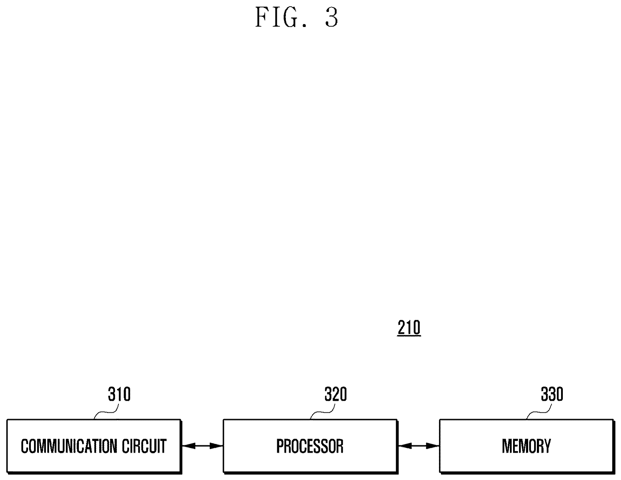

FIG. 3 is a block diagram of an electronic device according to an embodiment.

According to an embodiment, the electronic device 210 (for example, the electronic device 100 of FIG. 1) may include a communication circuit 310 (for example, the communication circuit 160 of FIG. 1), a processor 320 (for example, the processor 110 of FIG. 1), and/or memory 330 (for example, the memory 120 of FIG. 1).

The communication circuit 310 may be a communication circuit supporting short-range wireless communication. The short-range wireless communication may include various short-range wireless communication supportable by the electronic device 210. For example, the short-range wireless communication may be Wi-Fi.

The communication circuit 310 may include various circuit structures used for modulating and/or demodulating signals within the electronic device 210. For example, the communication circuit 310 may modulate a signal in a baseband into a signal in a radio frequency (RF) band to output the signal through an antenna (not shown) or demodulate the signal in the RF band received through the antenna into the signal in the baseband and transmit the signal to the processor 320.

The processor 320 may be electrically or operatively connected to the communication circuit 310 to control the communication circuit 310. The processor 320 may include at least one processor, and the at least one processor may individually or collectively perform the following operations(e.g. any one or more of the operations performed by an/the electronic device as described herein).

The memory 330 may store instructions executable by the processor 320. The operation of the processor 320 described below may be performed according to execution of the instructions stored in the memory 330.

The processor 320 may detect (or identify, determine, sense etc.) activation of a service (or operation, procedure etc.) using short-range wireless communication between the electronic device 210 and a first external electronic device (for example, the first external electronic device 220 of FIG. 2A). The service using the short-range wireless communication may include a service in which the electronic device 210 and the first external electronic device 220 transmit and/or receive data through D2D communication. For example, an operation in which the electronic device 210 transmits data to and/or receives data from the first external electronic device 220. The D2D communication between the electronic device 210 and the first external electronic device 220 may include Wi-Fi direct.

As detecting the service using the short-range wireless communication between the electronic device 210 and the first external electronic device 220, the processor 320 may control the communication circuit 310 to make a connection using the short-range wireless communication between the electronic device 210 and the first external electronic device 220. When the electronic device 210 transmits data (or file or content) to the first external electronic device 220, the processor 320 may generate or establish a first group (for example, the first group 201 of FIG. 2A) including the electronic device 210 to make the electronic device 210 operate as a group owner (GO). After generating the first group 201, the processor 320 may control (e.g. instruct, or facilitate) the first external electronic device 220 to join the first group 201. The first external electronic device 220 may operate as a group client (GC) of the first group 201.

The processor 320 may detect (or identify, determine, sense etc.) activation of a service (or operation, procedure etc.) using short-range wireless communication between the electronic device 210 and a second external electronic device (for example, the second external electronic device 230 of FIG. 2A). The service using the short-range wireless communication may include a service in which the electronic device 210 and the second external electronic device 230 transmit and/or receive data through D2D communication. For example, an operation in which the electronic device 210 transmits data to and/or receives data from the second external electronic device 230. The service may be the same type of service as that between the electronic device 210 and the first external electronic device 230 or a different type of service. The D2D communication between the electronic device 210 and the second external electronic device 230 may include Wi-Fi direct.

As detecting the service using the short-range wireless communication between the electronic device 210 and the second external electronic device 230, the processor 320 may control the communication circuit 310 to make a connection using the short-range wireless communication between the electronic device 210 and the second external electronic device 230. When the electronic device 210 receives data (or file or content) from the second external electronic device 230, the processor 320 may join a second group (for example, the second group 202 of FIG. 2A) generated by the second external electronic device 230. When the electronic device 210 receives data from the second external electronic device 230, the electronic device 210 may operate as the GC, and the second external electronic device 230 may operate as the GO.

There is no limitation in the order of generation of the first group 201 by the electronic device 210 and the order of joining of the second electronic device 210 in the second group 202. The electronic device 210 may join the second group 202 after generating the first group 201 or generate the first group 201 after the electronic device 210 joins the second group 202. The electronic device 210 may belong to both the first group 201 and the second group 202 and may operate as the GO of the first group 201 and the GC of the second group 202.

The processor 320 may control the communication circuit 310 to allow the electronic device 210 to transmit data to the first external electronic device 220 belonging to the first group 201 and/or allow the electronic device 210 to receive data from the second external electronic device 230 belonging to the second group 202.In various examples, the electronic device 210 may be transmitting data to the first and second external electronic devices 220, 230, and, in other examples, the electronic device 210 may be receiving data from the first and second external electronic devices 220, 230.

The processor 320 may detect (or identify, determine, sense etc.) activation of a service (e.g. an operation, a procedure etc,) performed by a third external electronic device (for example, the third external electronic device 240 of FIG. 2B and the electronic device 210) while the electronic device 210 transmits data to the first external electronic device 220 belonging to the first group 201 and/or the electronic device 210 receives data from the second external electronic device 230 belonging to the second group 202, i.e. while the first group 201 and the second group 202 are established/generated.

The service performed by the third external electronic device 240 and the electronic device 210 may include a service performed using short-range wireless communication by the electronic device 210 and the third external electronic device 240. The service performed using the short-range wireless communication by the electronic device 210 and the third external electronic device 240 may be referred to as a service using data transmitted/received through a connected channel.

The processor 320 may detect activation of the service using the short-range wireless communication between the electronic device 210 and the third external electronic device 240. According to an embodiment, the service using the short-range wireless communication may include at least one of a content (or data or file) sharing service or a multi-device environment (MDF) support service. The third external electronic device 240 may transmit (e.g. as part of or based on activating the service) a connection request message to the electronic device 210 to transmit data to the electronic device 210, and the electronic device 210 may detect activation of the service using the short-range wireless communication between the electronic device 210 and the third external electronic device 240 as the connection request message is received through various schemes (for example, short-range wireless communication or out-of-band (OOB) short-range wireless communication different from the short-range wireless communication).

As detecting the activation of the service using the short-range wireless communication between the electronic device 210 and the third external electronic device 240, the processor 320 may identify (e.g. determine, detect etc.) capability information of the communication circuit 310 and/or a characteristic of the service using the short-range wireless communication between the electronic device 210 and the third external electronic device 240.

The capability information of the communication circuit 310 may include the maximum number of external electronic devices (for example, the first external electronic device 220, the second external electronic device 230, and/or the third external electronic device 240) which can be connected to the electronic device 210 via the short-range wireless communication supported by the communication circuit 310. For example, the capability information of the communication circuit 310 may be regarded as a maximum number of connectable external electronic devices associated with the communication circuit 310.

According to an embodiment, when the number of external electronic devices which can be connected to the electronic device 210 via the short-range wireless communication supported by the communication circuit 310 is 8, the third external electronic device 240 can be connected to the electronic device 210 via the short-range wireless communication. This is due to the electronic device 210 only being connected to (e.g. in a group with) the first external electronic device 220 and the second external electronic device 230, so there is capacity/capability for connections to further external electronic devices.

According to another example, when the number of external electronic devices which can be connected to the electronic device 210 via the short-range wireless communication supported by the communication circuit 310 is 2, the third external electronic device 240 cannot be connected to the electronic device 210 via the short-range wireless communication.This is due to the electronic device 210 already being connected to (e.g. in a group with) the first external electronic device 220 and the second external electronic device 230.

The processor 320 may identify capability information of the communication circuit 310 and the number of external electronic devices (for example, the first external electronic device 220 and the second external electronic device 230) connected to the electronic device 210 via the short-range wireless communication according to every configured period, and control the communication circuit 310 to broadcast a message including information indicating the number of external electronic devices which can be connected to the electronic device 210.For example, optionally periodically (e.g. based on a configured or predetermined period), the electronic device 310 may broadcast a message indicating a number of external electronic devices which can (e.g. can still, based on number of current connections and the maximum number of connectable external electronic devices) be connected to the electronic device 210. In various examples, if the electronic device 210 is queried for (e.g. by another external electronic device) the information or the number of external electronic devices which can be connected to the electronic device 210 (i.e. if this is requested), the electronic device 210 may response (e.g. via unicast) with the information or the number of external electronic devices which can be connected to the electronic device 210.

The characteristic of the service using the short-range wireless communication between the electronic device 210 and the third external electronic device 240 may include an operation mode (or communication mode, or communication type) for performing the service using the short-range wireless communication between the electronic device 210 and the third external electronic device 240. The operation mode in which the electronic device 210 performs the service using the short-range wireless communication between the electronic device 210 and the third external electronic device 240 may include a data transmission mode and/or a data reception mode.

According to an embodiment, the electronic device 210 may operate in the data transmission mode when transmitting data to the third external electronic device 240 and may operate the data reception mode when receiving data (or content or file) from the third external electronic device 240.

Based on the capability information of the communication circuit 310 and the characteristic of the service using the short-range wireless communication between the electronic device 210 and the third external electronic device 240, the processor 320 may determine (or identify, select etc.) whether to join a third group (for example, the third group of FIG. 2B) to be generated by the third external electronic device 240 or the third group already generated by the third external electronic device 240. **In** various examples, this determination is based on the capability information and, optionally, on the characteristic of the service.

According to an embodiment, the processor 320 may identify that a short-range wireless communication connection between the third external electronic device 240 and the electronic device 210 is possible based on the capability information of the communication circuit 310 and determine to join the third group, based on identification of the data reception mode of receiving data (or content or file) from the third external electronic device 240, based on the characteristic of the service.

According to an embodiment, the processor 320 may identify that the number of external electronic devices connected to the electronic device 210 through short-range wireless communication is smaller than the maximum number of connectable external electronic devices supported by the communication circuit 310, based on the capability information of the communication circuit 310 and determine to join the third group, based on identification of the data reception mode of receiving data (or content or file) from the third external electronic device 240, based on the characteristic of the service.

The third group is a group (e.g. device group) in which the third external electronic device 240 operates as the group owner (GO) and may be a group that is not dissolved even though a group (for example, the second group 202) to which the electronic device 210 belongs is dissolved according to completion of data transmission to the electronic device 210 by another external electronic device (for example, the second external electronic device 230 belonging to the second group 202). Accordingly, the electronic device 210 may receive (or smoothly receive) data transmitted by the third external electronic device 240 by joining the third group generated by the third external electronic device 240 transmitting data to the electronic device 210.

The processor 320 may perform a series of operations for joining the third group with the third external electronic device 240 according to determining to join the third group. According to an embodiment, the processor 320 may receive information on the third group (for example, a frequency band of the third group, channel information, and/or identification information of the third group) from the third external electronic device 240, and join the third group based on the information on the third group received from the third external electronic device 240. After joining the third group, the processor 320 may receive data (or content or file) from the third external electronic device 240 belonging to the third group.

In the third group, the processor 320 may maintain the state in which the electronic device 210 belongs to the first group 201 and the second group 202. According to an embodiment, the electronic device 210 may operate as the GO of the first group 201, operate as the GC of the second group 202, and operate as the GC of the third group.

According to an embodiment, when the number of external electronic devices connected to the electronic device 210 through short-range wireless communication is the maximum number of connectable external electronic devices supported by the communication circuit 310, based on capability information of the communication circuit 310, the processor 320 may determine not to join the third group. It is because, when the number of external electronic devices connected to the electronic device 210 through short-range wireless communication is the maximum number of connectable external electronic devices supported by the communication circuit 310, the electronic device 210 cannot be connected to the third external electronic device 240 via the short-range wireless communication.

As determining not to join the third group, the processor 320 may provide information indicating not to join the third group. According to an embodiment, the processor 320 may control the communication circuit 310 to transmit the information indicating not to join the third group to the third external electronic device 240. Alternatively, the processor 320 may control an entity (for example, another communication circuit (not shown)) supporting other short-range wireless communication to transmit the information indicating not to join the third group to the third external electronic device 240 through other short-range wireless communication (for example, Bluetooth). The third external electronic device 240 may receive a message including information indicating the number of external electronic devices, which can be connected to the electronic device 210, transmitted by the electronic device 210 and, when identifying that the electronic device 210 can be connected to the third external electronic device 240 (for example, the connection between the external electronic device of the first group 201 and/or the external electronic device of the second group 202 and the electronic device 210 is released), based on the information indicating the number of external electronic devices which can be connected to the electronic device 210, the third external electronic device 240 may attempt again the connection via the short-range wireless communication with the electronic device 210.For example, the third external electronic device 240 may identify that a connection between the electronic device 210 and the first external electronic device 220 and/or the second external electronic device 230 has been released, and attempt to the electronic device 210 again on this basis.

According to an embodiment, the processor 320 may identify that the electronic device 210 operates in a data transmission mode in which data is transmitted to the third external electronic device 240, based on a characteristic of the service. The processor 320 may determine to no join the third group, based on determination that the electronic device 210 operates in the data transmission mode in which data is transmitted to the third external electronic device 240. For example, if (or based on) the service relates (or relating) to transmitting data to the third external electronic device 240, the electronic device may not join the third group or may reject the third external electronic device 240.

The electronic device 210 may operate as the group owner (GO) of the first group 201 in order to transmit data to the first external electronic device 210. Based on that the electronic device 210 operates in the data transmission mode in which data is transmitted to the third external electronic device 240, the processor 320 may not join the third group but may allow the third external electronic device 240 to join the first group 201. For example, the electronic device 210 may support or facilitate the third external electronic device 240 joining the first group 201. According to joining the first group 201, the third external electronic device 240 may operate as the group client (GC) of the first group 201 and receive data from the electronic device 210 through a frequency band allocated to the first group 201. The electronic device 210 may operate as the GO of the first group 201 and, before data transmission to external electronic devices (for example, the first external electronic device 220 and/or the third external electronic device 240) operating as the GC, maintain the first group 201 (or may not dissolve the first group 201). Accordingly, the connection between the electronic device 210 and the third external electronic device 240 through short-range wireless communication may be maintained.

The above-described example is an example where in the electronic device 210 belongs to the first group 201, the second group 202, and/or the third group. However, the electronic device 210 according to the disclosure may belong to more groups, based on the performance of the communication circuit 310.

The processor 320 may detect activation of the service performed by a new external electronic device (for example, a fourth external electronic device (not shown)) and the electronic device 210 in the state where the electronic device 210 belongs to all of the first group 201, the second group 202, and/or the third group.

The processor 320 may determine whether to join a fourth group generated by the fourth external electronic device (or to be generated by the fourth external electronic device), based on capability information of the communication circuit 310 and a characteristic of the service performed between the fourth external electronic device and the electronic device 210. For example, the case of activation of a service performed by a new, e.g. fourth, external electronic device may be treated analogously to the case of activation of a service performed by the third external electronic device 240, i.e. according to any of the examples, embodiments etc. described above.

The capability information of the communication circuit 310 may include the maximum number of external electronic devices (for example, the first external electronic device 210, the second external electronic device 220, and/or the third external electronic device 230) which can be connected to the electronic device 210 via the short-range wireless communication supported by the communication circuit 310.

The characteristic of the service using short-range wireless communication between the electronic device 210 and the fourth external electronic device may include an operation mode for performing the service using the short-range wireless communication between the electronic device 210 and the fourth external electronic device. The operation mode for performing the service using short-range wireless communication between the electronic device 210 and the fourth external electronic device may include a data transmission mode and/or a data reception mode.

According to an embodiment, the processor 320 may identify that a wireless communication connection between the fourth external electronic device and the electronic device 210 is possible based on the capability information of the communication circuit 310, and determine to join the fourth group, based on identification that the electronic device 210 operates in the data reception mode in which data (or content or file) is received from the fourth external electronic device, based on the characteristic of the service.

The fourth group is a group in which the fourth external electronic device operates as the group owner (GO) and may be a group that is not dissolved even though a group (for example, the second group 202) to which the electronic device 210 belongs is dissolved according to completion of data transmission to the electronic device 210 by another external electronic device (for example, the second external electronic device 230 belonging to the second group 202). Accordingly, the electronic device 210 may smoothly receive data from the fourth external electronic device by joining the fourth group generated by the fourth external electronic device transmitting data to the electronic device 210.

According to determination to join the fourth group, the processor 320 may perform a series of operations for joining the fourth group with the fourth external electronic device. According to an embodiment, the processor 320 may receive information on the fourth group (for example, a frequency band of the fourth group, channel information, and/or identification information of the fourth group) from the fourth external electronic device and join the fourth group, based on the information on the fourth group received from the fourth external electronic device. The processor 320 may receive data (or content or file) from the fourth external electronic device belonging to the fourth group after joining the fourth group.

In joining the fourth group, the processor 320 may maintain the state in which the electronic device 210 belongs to the first group 201, the second group 202, and the third group. According to an embodiment, the electronic device 210 may operate as the GO of the first group 201, operate as the GC of the second group 202, operate as the GC of the third group, and operate as the GC of the fourth group.

Referring to the above-described example, it was assumed that the entity transmitting data (or file or content) operates as the GO of one group and the entity receiving data (or file or content) operates as the GC of one group, but the disclosure is not limited thereto. According to an embodiment, the entity transmitting data (or file or content) may operate as the GC of one group, and the entity receiving data (or file or content) may operate as the GO of one group.

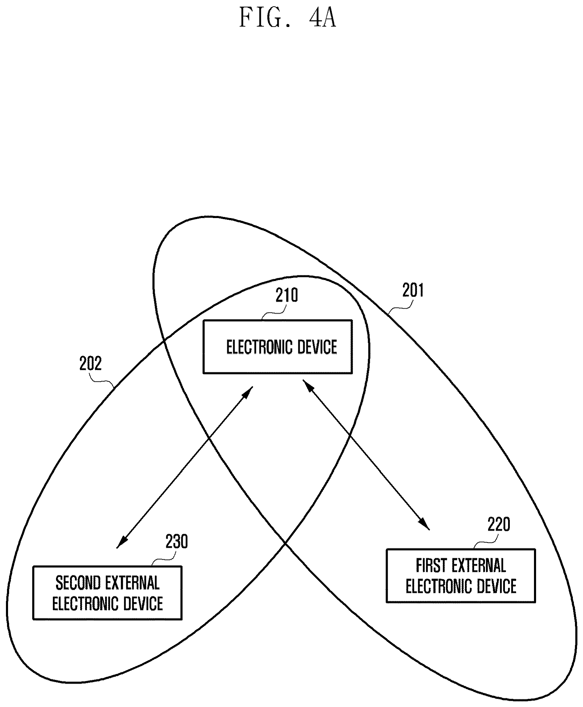

FIG. 4A is a diagram illustrating an example in which the electronic device performs short-range wireless communication with a first external electronic device and a second external electronic device according to an embodiment.

The electronic device 210 may detect activation of a service using short-range wireless communication between the electronic device 210 and the first external electronic device 220. The service using the short-range wireless communication may include a service in which the electronic device 210 and the first external electronic device 220 transmit and/or receive data through D2D communication. The D2D communication between the electronic device 210 and the first external electronic device 220 may include Wi-Fi direct.

As detecting the serving using the short-range wireless communication between the electronic device 210 and the first external electronic device 220, the electronic device 210 may control the communication circuit 310 to make the connection using the short-range wireless communication between the electronic device 210 and the first external electronic device 220. When or based on the electronic device 210 transmits data (or file or content) to the first external electronic device 220, the electronic device 210 may generate the first group 201 including the electronic device 210 to make the electronic device 210 operate as the group owner (GO). After generating the first group 201, the electronic device 210 may control the first external electronic device 220 to join the first group 201. The first external electronic device 220 may operate as a group client (GC) of the first group 201.

The electronic device 210 may detect activation of a service using short-range wireless communication between the electronic device 210 and the second external electronic device 230. The service using the short-range wireless communication may include a service in which the electronic device 210 and the first external electronic device 230 transmit and/or receive data through D2D communication. The D2D communication between the electronic device 210 and the second external electronic device 230 may include Wi-Fi direct.

As detecting the serving using the short-range wireless communication between the electronic device 210 and the second external electronic device 230, the electronic device 210 may control the communication circuit 310 to make the connection using the short-range wireless communication between the electronic device 210 and the second external electronic device 230. When or based on the electronic device 210 receives data (or file or content) from the second external electronic device 230, the electronic device 210 may join the second group (for example, the second group 202 of FIG. 2A) generated by the second external electronic device 230. When the electronic device 210 receives data from the second external electronic device 230, the electronic device 210 may operate as the GC, and the second external electronic device 230 may operate as the GO.

There is no limitation in the order of generation of the first group 201 by the electronic device 210 and the order of joining of the second electronic device 210 in the second group 202. The electronic device 210 may join in the second group 202 after generating the first group 201 and generate the first group 201 after the electronic device 210 joins in the second group 202. The electronic device 210 may belong to both the first group 201 and the second group 202 and may operate as the GO of the first group 201 and the GC of the second group.

The electronic device 210 may control the communication circuit 310 to transmit data to the first external electronic device 220 belonging to the first group 201 and/or to receive data from the second external electronic device 230 belonging to the second group 202.

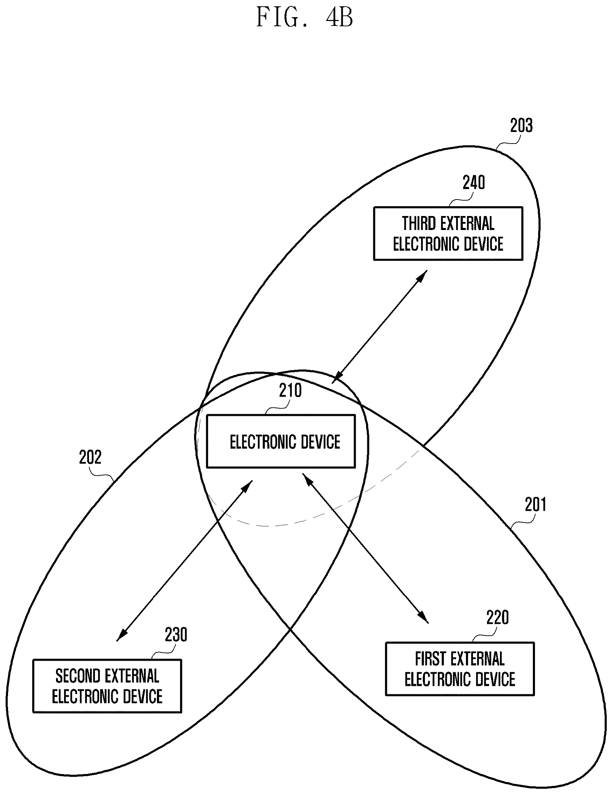

FIG. 4B is a diagram illustrating an example in which the electronic device performs short-range wireless communication with the first external electronic device, the second external electronic device, and the third external electronic device according to an embodiment.

The electronic device 210 may detect activation of a service performed by the third external electronic device 240 and the electronic device 210 while the electronic device 210 transmits data to the first external electronic device 220 belonging to the first group 201 and/or the electronic device 210 receives data from the second external electronic device 230 belonging to the second group 202.

The service performed by the third external electronic device 240 and the electronic device 210 may include a service performed using short-range wireless communication by the electronic device 210 and the third external electronic device 240. The service performed using the short-range wireless communication by the electronic device 210 and the third external electronic device 240 may be referred to as a service using data transmitted/received through a connected channel.

The electronic device 210 may detect activation of a service using short-range wireless communication between the electronic device 210 and the third external electronic device 240. According to an embodiment, the service using the short-range wireless communication may include at least one of a content (or data or file) sharing service or a multi-device environment (MDE) support service. The third external electronic device 240 may transmit a connection request message to the electronic device 210 to transmit data to the electronic device 210, and the electronic device 210 may detect activation of the service using the short-range wireless communication between the electronic device 210 and the third external electronic device 240 by receiving the connection request message through various schemes (for example, short-range wireless communication or short-range wireless communication (out-of band (OOB) different from the short-range wireless communication).

As detecting activation of the service using short-range wireless communication between the electronic device 210 and the third external electronic device 240, the electronic device 210 may identify capability information of the communication circuit 310 and a characteristic of the service using the short-range wireless communication between the electronic device 210 and the third external electronic device 240.

The capability information of the communication circuit 310 may include the maximum number of external electronic devices (for example, the first external electronic device 210, the second external electronic device 220, and/or the third external electronic device 230) which can be connected to the electronic device 210 via the short-range wireless communication supported by the communication circuit 310.

According to an embodiment, when the number of external electronic devices which can be connected to the electronic device 210 via the short-range wireless communication supported by the communication circuit 310 is 8, the third external electronic device 230 can be connected to the electronic device 210 via the short-range wireless communication.

According to another example, when the number of external electronic devices which can be connected to the electronic device 210 via the short-range wireless communication supported by the communication circuit 310 is 2, the third external electronic device 230 cannot be connected to the electronic device 210 via the short-range wireless communication.

The electronic device 210 may identify the capability information of the communication circuit 310 and the number of external electronic devices (for example, the first external electronic device 220 and the second external electronic device 230) connected to the electronic device 210 through short-range wireless communication according to every configured period and control the communication circuit 310 to broadcast a message including information indicating the number of external electronic devices connectable to the electronic device 210.

The characteristic of the service using the short-range wireless communication between the electronic device 210 and the third external electronic device 240 may include an operation mode for performing the service using the short-range wireless communication between the electronic device 210 and the third external electronic device 240. The operation mode in which the electronic device 210 performs the service using the short-range wireless communication between the electronic device 210 and the third external electronic device 240 may include a data transmission mode and/or a data reception mode.

According to an embodiment, the electronic device 210 may operate in the data transmission mode when transmitting data to the third external electronic device 240 and may operate the data reception mode when receiving data (or content or file) from the third external electronic device 240.

Based on the capability information of the communication circuit 310 and the characteristic of the service using the short-range wireless communication between the electronic device 210 and the third external electronic device 240, the electronic device 210 may determine whether to join the third group 203 to be generated by the third external electronic device 240 or the third group 203 already generated by the third external electronic device 240.

According to an embodiment, the electronic device 210 may identify that the short-range wireless communication connection between the third external electronic device 240 and the electronic device 210 is possible based on the capability information of the communication circuit 310 and determine to join the third group 203, based on identification of the operation in the data reception mode in which data (or content or file) is received from the third external electronic device 240, based on the characteristic of the service.

According to an embodiment, the electronic device 210 may identify that the number of external electronic devices connected to the electronic device 210 through short-range wireless communication is smaller than the maximum number of connectable external electronic devices supported by the communication circuit 310, based on the capability information of the communication circuit 310, and determine to join the third group 203, based on identification of the operation in the data reception mode in which data (or content or file) is received from the third external electronic device 240, based on the characteristic of the service.

As determining to join the third group 203, the electronic device 210 may perform a series of operations for joining the third group 203 with the third external electronic device 240. According to an embodiment, the electronic device 210 may receive information on the third group 203 (for example, a frequency band of the third group 203, channel information, and/or identification information of the third group 203) from the third external electronic device 240 and join the third group 203, based on the information on the third group 203 received from the third external electronic device 240. After joining the third group 230, the electronic device 210 may receive data (or content or file) from the third external electronic device 240 belonging to the third group 203.

In joining the third group 203, the electronic device 210 may maintain the state in which the electronic device 210 belongs to the first group 201 and the second group 202. According to an embodiment, the electronic device 210 may operate as the GO of the first group 201, operate as the GC of the second group 202, and operate as the GC of the third group 203.

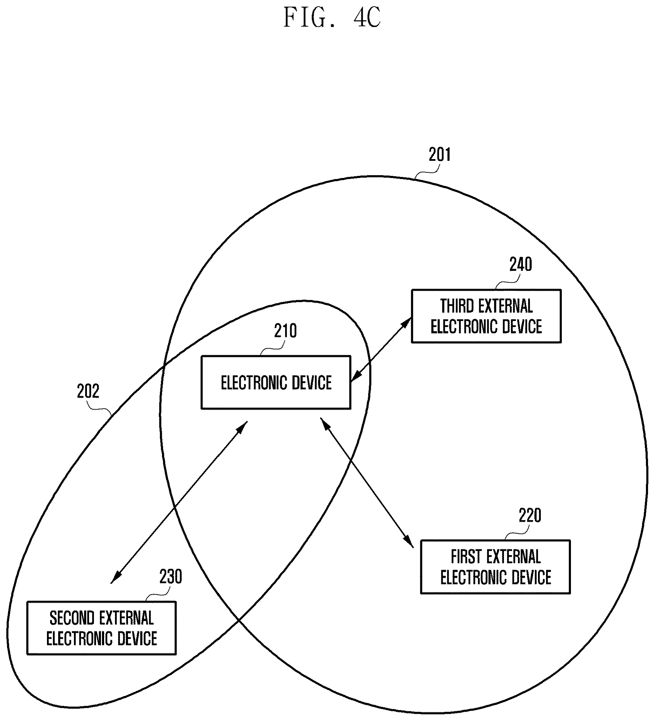

FIG. 4C is a diagram illustrating an example in which the electronic device performs short-range wireless communication with the first external electronic device, the second external electronic device, and the third external electronic device according to an embodiment.

The electronic device 210 may detect activation of a service performed by the third external electronic device 240 and the electronic device 210 while the electronic device 210 transmits data to the first external electronic device 220 belonging to the first group 201 and/or the electronic device 210 receives data from the second external electronic device 230 belonging to the second group 202.

The service performed by the third external electronic device 240 and the electronic device 210 may include a service performed using short-range wireless communication by the electronic device 210 and the third external electronic device 240. The service performed using the short-range wireless communication by the electronic device 210 and the third external electronic device 240 may be referred to as a service using data transmitted/received through a connected channel.

The electronic device 210 may detect activation of a service using short-range wireless communication between the electronic device 210 and the third external electronic device 240. According to an embodiment, the service using the short-range wireless communication may include at least one of a content (or data or file) sharing service or a multi-device environment (MDF) support service. The third external electronic device 240 may transmit a connection request message to the electronic device 210 to transmit data to the electronic device 210, and the electronic device 210 may detect activation of the service using the short-range wireless communication between the electronic device 210 and the third external electronic device 240 by receiving the connection request message through various schemes (for example, short-range wireless communication or OOB short-range wireless communication different from the short-range wireless communication).

As detecting activation of the service using short-range wireless communication between the electronic device 210 and the third external electronic device 240, the electronic device 210 may identify capability information of the communication circuit 310 and a characteristic of the service using the short-range wireless communication between the electronic device 210 and the third external electronic device 240.

The capability information of the communication circuit 310 may include the maximum number of external electronic devices (for example, the first external electronic device 210, the second external electronic device 220, and/or the third external electronic device 230) connectable to the electronic device 210 through short-range wireless communication supported by the communication circuit 310.

According to an embodiment, when the number of external electronic devices which can be connected to the electronic device 210 via the short-range wireless communication supported by the communication circuit 310 is 8, the third external electronic device 230 can be connected to the electronic device 210 via the short-range wireless communication.

According to another example, when the number of external electronic devices which can be connected to the electronic device 210 via the short-range wireless communication supported by the communication circuit 310 is 2, the third external electronic device 230 cannot be connected to the electronic device 210 via the short-range wireless communication.

The electronic device 210 may identify the capability information of the communication circuit 310 and the number of external electronic devices (for example, the first external electronic device 220 and the second external electronic device 230) connected to the electronic device 210 through short-range wireless communication according to every configured period and control the communication circuit 310 to broadcast a message including information indicating the number of external electronic devices connectable to the electronic device 210.

The characteristic of the service using the short-range wireless communication between the electronic device 210 and the third external electronic device 240 may include an operation mode for performing the service using the short-range wireless communication between the electronic device 210 and the third external electronic device 240. The operation mode in which the electronic device 210 performs the service using the short-range wireless communication between the electronic device 210 and the third external electronic device 240 may include a data transmission mode and/or a data reception mode.

According to an embodiment, the electronic device 210 may operate in the data (or content of file) transmission mode when transmitting data to the third external electronic device 240 and may operate the data reception mode when receiving data (or content or file) from the third external electronic device 240.

Based on the capability information of the communication circuit 310 and a characteristic of the service using the short-range wireless communication between the electronic device 210 and the third external electronic device 240, the electronic device 210 may determine whether to join the third group 203 to be generated by the third external electronic device 240 or the third group already generated by the third external electronic device 240.

According to an embodiment, when the number of external electronic devices connected to the electronic device 210 through short-range wireless communication is the maximum number of connectable external electronic devices supported by the communication circuit 310, based on the capability information of the communication circuit 310, the electronic device 210 may determine to not join the third group. It is because, when the number of external electronic devices connected to the electronic device 210 through short-range wireless communication is the maximum number of connectable external electronic devices supported by the communication circuit 310, the electronic device 210 cannot be connected to the third external electronic device 240 via the short-range wireless communication.

As determining to not join the third group, the electronic device 210 may provide information indicating not to join the third group. According to an embodiment, the electronic device 210 may control the communication circuit 310 to transmit the information indicating not to join the third group to the third external electronic device 240. Alternatively, the electronic device 210 may control an entity (for example, another communication circuit (not shown)) supporting other short-range wireless communication to transmit the information indicating not to join the third group to the third external electronic device 240 through other short-range wireless communication (for example, Bluetooth). The third external electronic device 240 may receive a message including information indicating the number of external electronic devices, which can be connected to the electronic device 210, transmitted by the electronic device 210 and, when identifying that the electronic device 210 can be connected to the third external electronic device 240 (for example, the connection between the external electronic device of the first group 201 and/or the external electronic device of the second group 202 and the electronic device 210 is released), based on the information indicating the number of external electronic devices which can be connected to the electronic device 210, the third external electronic device 240 may attempt again the connection via the short-range wireless communication with the electronic device 210.

According to an embodiment, the electronic device 210 may identify that the electronic device 210 operates in the data transmission mode in which data is transmitted to the third external electronic device 240, based on a characteristic of the service. For example, the electronic device 210 may identify that the service performable with the third external electronic device 240 is one of data transmission (data transmission mode) from the electronic device 210 to the third external electronic device 240. Based on identification that the electronic device 210 operates in the data transmission mode in which data is transmitted to the third external electronic device 240, the electronic device 210 may determine to not join the third group.

The electronic device 210 may operate as the group owner (GO) of the first group 201 in order to transmit data to the first external electronic device 210. Based on identification that the electronic device 210 operates in the data transmission mode in which data is transmitted to the third external electronic device 240, the electronic device 210 may make the third external electronic device 240 join the first group 201 without joining the third group. According to joining the first group 201, the third external electronic device 240 may operate as the group client (GC) of the first group 201 and receive data from the electronic device 210 through a frequency band allocated to the first group 201. The electronic device 210 may operate as the GO of the first group 201 and, before data transmission to external electronic devices (for example, the first external electronic device 220 and/or the third external electronic device 240) operating as the GC, maintain the first group 201 (or may not dissolve the first group 201). Accordingly, the connection between the electronic device 210 and the third external electronic device 240 through short-range wireless communication may be maintained.

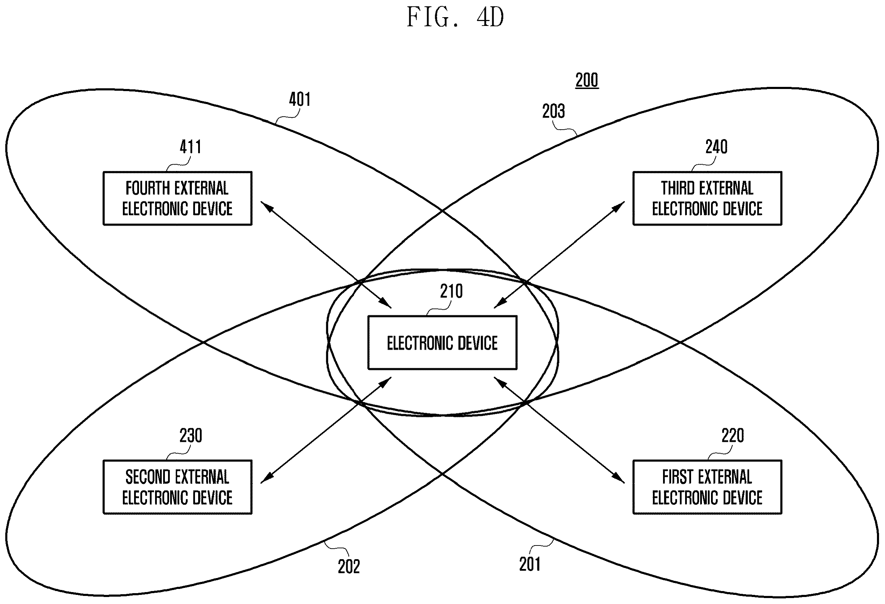

FIG. 4D is a diagram illustrating an example in which the electronic device performs short-range wireless communication with the first external electronic device, the second external electronic device, the third external electronic device, and the fourth external electronic device according to an embodiment.

The electronic device 210 may detect activation of the service performed by a new external electronic device (for example, the fourth external electronic device 411) and the electronic device 210 in the state in which the electronic device 210 belongs to both the first group 201, the second group 202, and/or the third group 203.

The electronic device 210 may determine whether to join the fourth group 401 generated by the fourth external electronic device 411 (or to be generated by the fourth external electronic device 411), based on capability information of the communication circuit 310 and a characteristic of the service performed between the fourth external electronic device 411 and the electronic device 210.

The capability information of the communication circuit 310 may include the maximum number of external electronic devices (for example, the first external electronic device 210, the second external electronic device 220, and/or the third external electronic device 230) which can be connected to the electronic device 210 via the short-range wireless communication supported by the communication circuit 310.

The characteristic of the service using the short-range wireless communication between the electronic device 210 and the fourth external electronic device 411 may include an operation mode for performing the service using the short-range wireless communication between the electronic device 210 and the fourth external electronic device 411. The operation mode in which the electronic device 210 performs the service using the short-range wireless communication between the electronic device 210 and the fourth external electronic device 411 may include a data transmission mode and/or a data reception mode.

According to an embodiment, the electronic device 210 may identify that the short-range wireless communication connection between the electronic device 210 and the fourth external electronic device 411 is possible based on capability information of the communication circuit 310 and determine to join the fourth group 401, based on identification that the electronic device 210 operates in the data reception mode in which data (or content or file) is received from the fourth external electronic device 411, based on a characteristic of the service.

As determining to join the fourth group 401, the electronic device 210 may perform a series of operations for joining the fourth group 401 with the fourth external electronic device 411. According to an embodiment, the electronic device 210 may receive information on the fourth group 401 (for example, a frequency band of the fourth group 401, channel information, and/or identification information of the fourth group 401) from the fourth external electronic device 411 and join the fourth group 401, based on the information on the fourth group 401 received from the fourth external electronic device 411. After joining the fourth group 401, the electronic device 210 may receive data (or content or file) from the fourth external electronic device 411 belonging to the fourth group 401.

In joining the fourth group 401, the electronic device 210 may maintain the state in which the electronic device 210 belongs to the first group 201, the second group 202, and the third group 203. According to an embodiment, the electronic device 210 may operate as the GO of the first group 201, operate as the GC of the second group 202, operate as the GC of the third group 203, and operate as the GC of the fourth group 401.

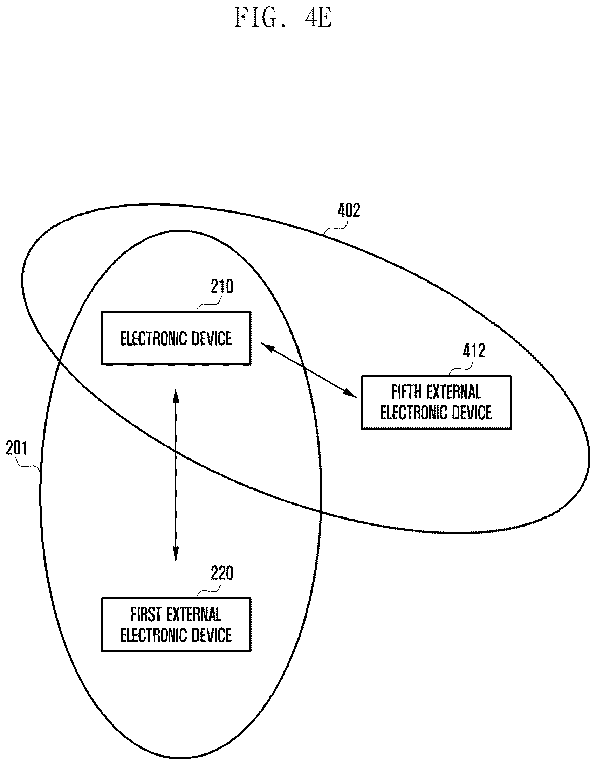

FIG. 4E is a diagram illustrating an example in which the electronic device performs short-range wireless communication with the first external electronic device and a fifth external electronic device according to an embodiment.

The electronic device 210 may detect activation of a service using short-range wireless communication between the electronic device 210 and the first external electronic device 220. The service using the short-range wireless communication may include a service in which the electronic device 210 and the first external electronic device 220 transmit and/or receive data through D2D communication. The D2D communication between the electronic device 210 and the first external electronic device 220 may include Wi-Fi direct.

As detecting the service using the short-range wireless communication between the electronic device 210 and the first external electronic device 220, the electronic device 210 may control the communication circuit 310 to make the connection using the short-range wireless communication between the electronic device 210 and the first external electronic device 220. When or based on the electronic device 210 transmits data (or file or content) to the first external electronic device 220, the electronic device 210 may generate a first group (for example, the first group 201 of FIG. 2A) including the electronic device 210 to make the electronic device 210 operate as the group owner (GO). After generating the first group 201, the electronic device 210 may control the first external electronic device 220 to join the first group 201. The first external electronic device 220 may operate as a group client (GC) of the first group 201.

The electronic device 210 may detect activation of a service using short-range wireless communication between the electronic device 210 and a fifth external electronic device 412. The service using the short-range wireless communication may include a service in which the electronic device 210 and the fifth external electronic device 412 transmit and/or receive data through D2D communication. The D2D communication between the electronic device 210 and the fifth external electronic device 412 may include Wi-Fi direct.

As detecting activation of the service using short-range wireless communication between the electronic device 210 and the fifth external electronic device 412, the electronic device 210 may identify capability information of the communication circuit 310 and a characteristic of the service using the short-range wireless communication between the electronic device 210 and the fifth external electronic device 412.For example, in a case where the electronic device 210 is connected to only a single external electronic device (e.g. the first external electronic device 220) or is included in only a single group (e.g. the first group 210), the electronic device 210 may use identified capability information of the communication circuit 310 and a characteristic of the service in determining whether or not to connect to or form a group with or join a group with the fifth external electronic device 412.

The capability information of the communication circuit 310 may include the maximum number of external electronic devices (for example, the first external electronic device 210, the second external electronic device 220, the third external electronic device 230, and/or the fourth external electronic device 411 of FIG. 4D) connectable to the electronic device 210 through short-range wireless communication supported by the communication circuit 310,

The capability information of the communication circuit 310 may include information on a combination of frequency bands in which signal transmission and/or reception are simultaneously possible. For example, the communication circuit 310 may simultaneously support transmission/reception of a signal through a first frequency band and transmission/reception of a signal through a second frequency band, and the capability information of the communication circuit 310 may include information on a combination of frequency bands (for example, the first frequency band and the second frequency band) in which transmission/reception of the signals is simultaneously possible.

The electronic device 210 may identify the capability information of the communication circuit 310 and the number of external electronic devices (for example, the first external electronic device 220 and the second external electronic device 230) connected to the electronic device 210 through short-range wireless communication according to every configured period and control the communication circuit 310 to broadcast a message including information indicating the number of external electronic devices connectable to the electronic device 210.

The characteristic of the service using the short-range wireless communication between the electronic device 210 and the fifth external electronic device 412 may include an operation mode for performing the service using the short-range wireless communication between the electronic device 210 and the fifth external electronic device 412. The operation mode in which the electronic device 210 performs the service using the short-range wireless communication between the electronic device 210 and the fifth external electronic device 412 may include a data transmission mode and/or a data reception mode.

According to an embodiment, the electronic device 210 may operate in the data transmission mode when transmitting data (or content or file) to the fifth external electronic device 412 and may operate the data reception mode when receiving data (or content or file) from the fifth external electronic device 412.

Based on the capability information of the communication circuit 310 and the characteristic of the service using the short-range wireless communication between the electronic device 210 and the fifth external electronic device 412, the electronic device 210 may determine whether to join the fifth group 402 to be generated by the fifth external electronic device 412 or the fifth group 402 already generated by the fifth external electronic device 412.

According to an embodiment, the electronic device 210 may identify that the short-range wireless communication connection between the fifth external electronic device 412 and the electronic device 210 is possible based on the capability information of the communication circuit 310 and determine to join the fifth group, based on identification of the operation in the data reception mode in which data (or content or file) is received from the fifth external electronic device 412, based on the characteristic of the service.

According to another embodiment, the electronic device 210 may identify (or detect, determine etc.) that the communication circuit 310 supports transmission and/or reception of a signal through a frequency band (for example, the first frequency band) used for communication of an external electronic device belonging to the first group 201 and/or transmission and/or reception of a signal through a frequency band (for example, the second frequency band) used for communication of an external electronic device belonging to the fifth group 402, based on the capability information of the communication circuit 310. When the communication circuit 310 supports transmission and/or reception of a signal through a frequency band (for example, the first frequency band) used for communication of an external electronic device belonging to the first group 201 and/or transmission and/or reception of a signal through a frequency band (for example, the second frequency band) used for communication of an external electronic device belonging to the fifth group 402, the electronic device 210 may determine to join the fifth group 402. In an example, when the communication circuit 310 supports (or is capable of) transmission and/or reception of a signal through a frequency band (for example, the second frequency band) used for communication of an external electronic device belonging to the fifth group 402, the electronic device 210 may determine to join the fifth group 402.

The second frequency band may be a frequency band higher than the first frequency band (or a frequency band having a larger bandwidth), and the electronic device 210 may transmit data to the fifth external electronic device 412 to have a higher transmission rate than the rate at which data is transmitted to the first external electronic device 210.

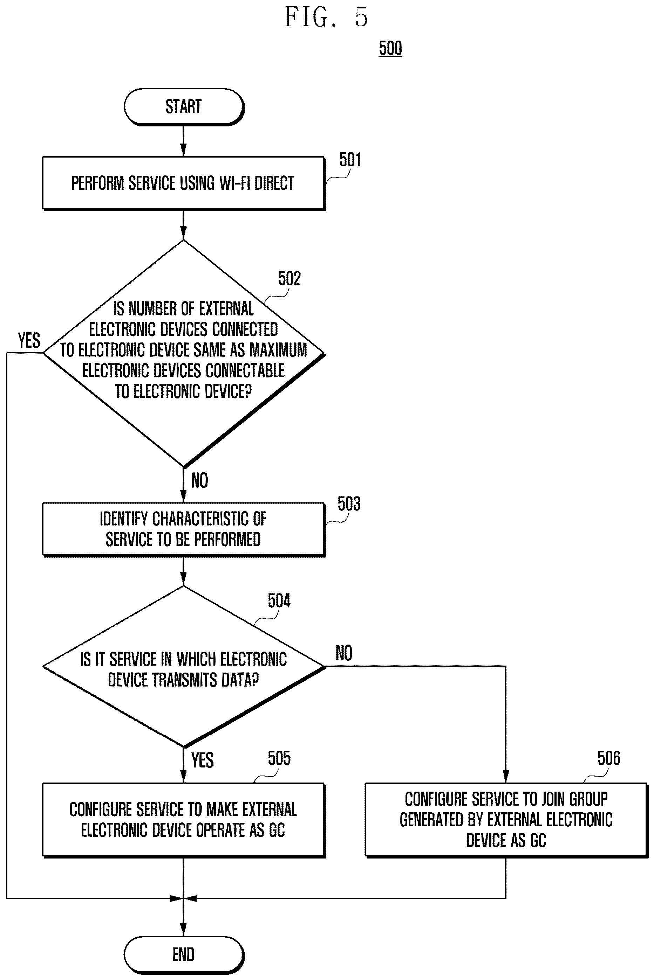

FIG. 5 is a diagram illustrating an example 500 in which the electronic device determines whether to join the third group, based on capability information of the communication circuit and a characteristic of the service performed with the third external electronic device according to an embodiment.

The electronic device (for example, the electronic device 210 of FIG. 3) may perform a service using Wi-Fi direct in operation 501.

The service using Wi-Fi direct may refer to a service using D2D communication (Wi-Fi direct) between the electronic device 210 and an external electronic device (for example, the first external electronic device 220 or the second external electronic device 230 of FIG. 2A, the third external electronic device 240 of FIG. 2B, the fourth external electronic device 411 of FIG. 4D, and/or the fifth external electronic device 412 of FIG. 4E). For example, the service using Wi-Fi direct may refer to a data (or content or file) sharing service or a multi-device environment support service of the electronic device 210 and the external electronic device 220, 230, 240, 411, or 412.

As performing the service using Wi-Fi direct, the electronic device 210 may identify the number of external electronic devices connected to the electronic device 210 through short-range wireless communication and/or the maximum number of external electronic devices connectable to the electronic device 210 every configured period. The electronic device 210 may control the communication circuit 310 to broadcast a message including information indicating the number of external electronic devices connectable to the electronic device 210. The number of external electronic devices connectable to the electronic device 210 may be determined based on difference between the maximum number of external electronic devices connectable to the electronic device 210 and the number of external electronic devices connected through short-range wireless communication. The message including the information indicating the number of external electronic devices connectable to the electronic device 210 may be broadcasted through a communication scheme (for example, Bluetooth) different from the short-range wireless communication.

The electronic device 210 may discover (or search for, or find, or identify, or detect) an external electronic device (for example, the first external electronic device 220 and/or the second external electronic device 230) connectable through Wi-Fi direct while the service using Wi-Fi Direct is performed. The electronic device 210 may discover an external electronic device and generate and/or join a group with the discovered external electronic device.

As detecting the service using Wi-Fi Direct between the electronic device 210 and the first external electronic device 220, the electronic device 210 may control the communication circuit 310 to make the connection using Wi-Fi direct between the electronic device 210 and the first external electronic device 220. When or based on the electronic device 210 transmits data (or file or content) to the first external electronic device 220, the electronic device 210 may generate a first group (for example, the first group 201 of FIG. 2A) including the electronic device 210 to make the electronic device 210 operate as the group owner (GO). After generating the first group 201, the electronic device 210 may control the first external electronic device 220 to join the first group 201. The first external electronic device 220 may operate as a group client (GC) of the first group 201.

The electronic device 210 may detect activation of a service using Wi-Fi direct between the electronic device 210 and a second external electronic device (for example, the second external electronic device 230 of FIG. 2A).

As detecting activation of the service using Wi-Fi Direct between the electronic device 210 and the second external electronic device 230, the electronic device 210 may control the communication circuit 310 to make the connection using Wi-Fi Direct between the electronic device 210 and the second external electronic device 230. When or based on the electronic device 210 receives data (or file or content) from the second external electronic device 230, the electronic device 210 may join a second group (for example, the second group 202 of FIG. 2A) generated by the second external electronic device 230. When the electronic device 210 receives data from the second external electronic device 230, the electronic device 210 may operate as the GC, and the second external electronic device 230 may operate as the GO.

The electronic device 210 may identify the capability information of the communication circuit 310 and the number of external electronic devices (for example, the first external electronic device 220 and the second external electronic device 230) connected to the electronic device 210 through short-range wireless communication according to every configured period and control the communication circuit 310 to broadcast a message including information indicating the number of external electronic devices connectable to the electronic device 210.

The electronic device 210 may detect activation of a service performed by a third external electronic device (for example, the third external electronic device 240 of FIG. 2B) and the electronic device 210 while the electronic device 210 transmits data to the first external electronic device 220 belonging to the first group 201 and/or the electronic device 210 receives data from the second external electronic device 230 belonging to the second group 202.

The service performed by the third external electronic device 240 and the electronic device 210 may include a service performed using Wi-Fi direct by the electronic device 210 and the third external electronic device 240.

The electronic device 210 may identify whether the number of external electronic devices connected to the electronic device is the same as the maximum number of external electronic devices connectable to the electronic device 210 in operation 502.

When the number of external electronic devices connected to the electronic device is the same as the maximum number of external electronic devices connectable to the electronic device 210 (operation 502-Y), the electronic device 210 may not make the connection with the third external electronic device 240. In an example, the third external electronic device 240 may be connected to the electronic device 210 after the connection between another external electronic device (for example, the first external electronic device 220 and/or the second external electronic device 230) and the electronic device 210 is released.

When the number of external electronic devices connected to the electronic device is not the same as the maximum number of external electronic devices connectable to the electronic device 210 (operation 502-N), the electronic device 210 may identify a characteristic of the service to be performed between the third external electronic device 240 and the electronic device 210 in operation 503.

The characteristic of the service using the short-range wireless communication between the electronic device 210 and the third external electronic device 240 may include an operation mode for performing the service using the short-range wireless communication between the electronic device 210 and the third external electronic device 240. The operation mode in which the electronic device 210 performs the service using the short-range wireless communication between the electronic device 210 and the third external electronic device 240 may include a data transmission mode and/or a data reception mode.

According to an embodiment, the electronic device 210 may operate in the data transmission mode when transmitting data (or content of file) to the third external electronic device 240 and may operate the data reception mode when receiving data (or content or file) from the third external electronic device 240.

In operation 504, the electronic device 210 may identify whether the service to be performed between the third external electronic device 240 and the electronic device 210 is a service in which the electronic device 210 transmits data to the third external electronic device 240, based on the characteristic of the service.

Based on identification that the service to be performed between the third external electronic device 240 and the electronic device 210 is a service in which the electronic device 210 transmits data to the third external electronic device 240 (operation 504-Yes), the electronic device 210 may configure (or instruct, support or facilitate) the external electronic device (for example, the third external electronic device 240) to operate as the GC in operation 505 (e.g. a GC in the first group).

According to an embodiment, the electronic device 210 may identify that the electronic device 210 operates in the data transmission mode in which data is transmitted to the third external electronic device 240, based on a characteristic of the service. Based on identification that the electronic device 210 operates in the data transmission mode in which data is transmitted to the third external electronic device 240, the electronic device 210 may determine to not join the third group.

The electronic device 210 may operate as the group owner (GO) of the first group 201 in order to transmit data to the first external electronic device 210. Based on identification that the electronic device 210 operates in the data transmission mode in which data is transmitted to the third external electronic device 240, the electronic device 210 may make the third external electronic device 240 join the first group 201 without joining the third group. According to joining the first group 201, the third external electronic device 240 may operate as the group client (GC) of the first group 201 and receive data from the electronic device 210 through a frequency band allocated to the first group 201. The electronic device 210 may operate as the GO of the first group 201 and may maintain the first group 201 (or may not dissolve the first group 201) before data transmission to external electronic devices (for example, the first external electronic device 220 and/or the third external electronic device 240) operating as the GC is completed. Accordingly, the connection between the electronic device 210 and the third external electronic device 240 through short-range wireless communication may be maintained.

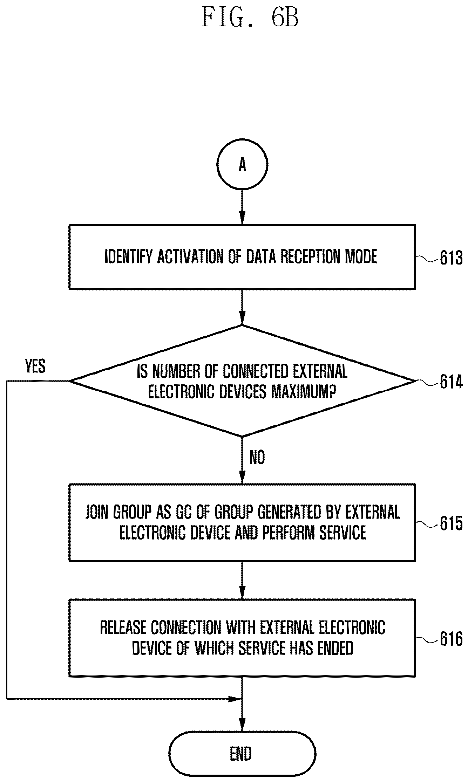

Based on identification that the service is a service in which the electronic device 210 does not transmit data to the third external electronic device 240 (operation 504-No), the electronic device 210 may configure the electronic device 210 to join the group (for example, the third group (for example, the third group 203 of FIG. 6B)) generated by the external electronic device (for example, the third external electronic device 240) as the GC in operation 506.

According to an embodiment, the electronic device 210 may identify that the short-range wireless communication connection between the third external electronic device 240 and the electronic device 210 is possible based on the capability information of the communication circuit 310, and determine to join the third group, based on identification of the operation in the data reception mode in which data (or content or file) is received from the third external electronic device 240, based on the characteristic of the service.

According to an embodiment, the electronic device 210 may identify that the number of external electronic devices connected to the electronic device 210 through short-range wireless communication is smaller than the maximum number of connectable external electronic devices supported by the communication circuit 310, based on the capability information of the communication circuit 310, and determine to join the third group, based on the identification of the operation in the data reception mode in which data (or content or file) is received from the third external electronic device 240, based on the characteristic of the service.

The third group is a group in which the third external electronic device 240 operates as the group owner (GO) and may be a group that is not dissolved even though a group (for example, the second group 202) to which the electronic device 210 belongs is dissolved according to completion of data transmission to the electronic device 210 by another external electronic device (for example, the second external electronic device 230 belonging to the second group 202). Accordingly, the electronic device 210 may smoothly receive data transmitted by the third external electronic device 240 by joining the third group generated by the third external electronic device 240 transmitting data to the electronic device 210.

As determining to join the third group, the electronic device 210 may perform a series of operations for joining the third group with the third external electronic device 240. According to an example, the electronic device 210 may receive information on the third group (for example, a frequency band of the third group, channel information, and/or identification information of the third group) from the third external electronic device 240 and join the third group, based on the information on the third group received from the third external electronic device 240. The electronic device 210 may receive data (or content or file) from the third external electronic device 240 belonging to the third group after joining the third group.

In joining the third group, the electronic device 210 may maintain the state in which the electronic device 210 belongs to the first group 201 and the second group 202. According to an embodiment, the electronic device 210 may operate as the GO of the first group 201, operate as the GC of the second group 202, and operate as the GC of the third group.

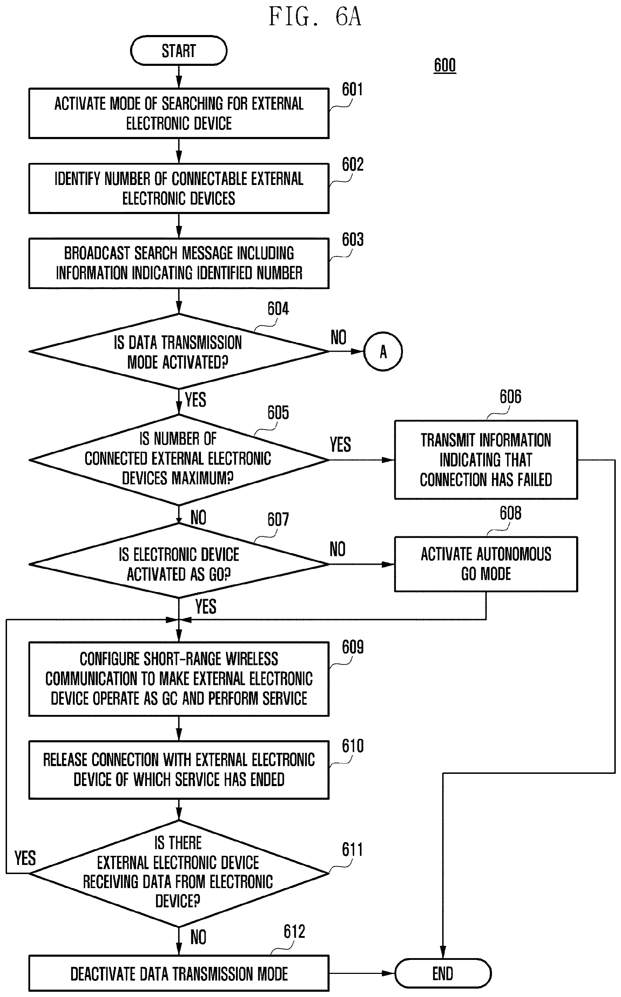

FIGS. 6A and 6B are diagrams illustrating an example 600 in which the electronic device performs short-range wireless communication according to an embodiment.

The electronic device (for example, the electronic device 210 of FIG. 3) may activate a mode in which an/the external electronic device (for example, the first external electronic device 220 or the second external electronic device 230 of FIG. 2A, the third external electronic device 240 of FIG. 2B, the fourth external electronic device 411 of FIG. 6C, and/or the fifth external electronic device 412 of FIG. 6D) is searched for in operation 601. For example, the electronic device 210 may search for one or more external electronic device.

In searching for the external electronic device 220, 230, 240, 411, or 412, the electronic device 210 may activate short-range wireless communication (For example, Wi-Fi) and search for the external electronic device 220, 230, 240, 411, or 412 by receiving a signal broadcasted by the external electronic device 220, 230, 240, 411, or 412. Alternatively, the electronic device 210 may search for the external electronic device 220, 230, 240, 411, or 412 by receiving a signal broadcasted by the external electronic device 220, 230, 240, 411, or 412 through a communication scheme (for example, Bluetooth) different from the short-range wireless communication.

The electronic device 210 may identify the number of connectable external electronic devices in operation 602.

The maximum number of external electronic devices connectable to the electronic device 210 may be limited by restrictions of the performance of the communication circuit (for example, the communication circuit 310 of FIG. 3) of the electronic device 210. The electronic device 210 may identify the maximum number of external electronic devices connectable to the electronic device 210, based on the capability information of the communication circuit 310.

The electronic device 210 may determine (or identify) the difference between the maximum number of external electronic devices connectable to the electronic device 210 and the number of external electronic devices connected to the electronic device 210 through short-range wireless communication as the number of connectable external electronic devices.

The electronic device 210 may broadcast a search message including information indicating the identified number of connectable external electronic devices in operation 603. For example, the electronic device 210 may broadcast an indication of how many more devices the electronic device 210 may connect to.

The electronic device 210 may broadcast a search message including information indicating the identified number of external electronic devices connectable through short-range wireless communication. Through wireless communication (for example, Bluetooth) different from the short-range wireless communication, the electronic device 210 may broadcast a search message including information indicating the identified number of external electronic devices connectable through short-range wireless communication.

The external electronic device to be connected with the electronic device 210 may be connected to the electronic device 210 through short-range wireless communication according to reception of the search message broadcasted by the electronic device 210.

The electronic device 210 may identify whether the data transmission mode is activated in operation 604.

The electronic device 210 may operate in at least one of the data transmission mode in which data is transmitted to the external electronic device or the data reception mode in which data is received from the external electronic device according to the connection with the external electronic device. The electronic device 210 may operate in the data reception mode in which data is received from at least one external electronic device (for example, the second external electronic device 230 and/or third external electronic device 240) while operating in the data transmission mode in which data is transmitted to at least one external electronic device (for example, the first external electronic device 220). The electronic device 210 may simultaneously perform the data transmission mode and the data reception mode.

When the data transmission mode is activated (operation 604-YES), the electronic device 210 may identify whether the number of external electronic devices connected to the electronic device 210 is the same as the maximum number of external electronic devices connectable to the electronic device 210 in operation 605.

According to identification that the number of external electronic devices connectable to the electronic device 210 is the maximum number (operation 605-YES), the electronic device 210 may transmit information indicating that the connection has failed to the external electronic device 220, 230, 240, 411, or 412 in operation 606.

The electronic device 210 may identify whether the electronic device 210 operates as the GO in operation 607.

The electronic device 210 may operate as the GO of the group (for example, the first group 201) generated by the electronic device 210. Alternatively, the electronic device 210 may operate as the GO of a group generated by another external electronic device (for example, the first external electronic device 220) which is not the electronic device 210 through negotiation between the electronic device 210 and the other external electronic device (for example, the first external electronic device 220).

Based on identification that the electronic device 210 does not operate as the GO (operation 607-NO), the electronic device 210 may activate an autonomous GO mode in operation 608.

As activating the autonomous GO mode, the electronic device 210 may generate a group (for example, the first group 201) in which the electronic device 210 operates as the GO.

Based on identification that the electronic device 210 operates as the GO (operation 607-YES), the electronic device 210 may configure short-range wireless communication to configure (e.g. to instruct, or support) the external electronic device (for example, the first external electronic device 220) operate as the GC and perform the service in operation 609.

The electronic device 210 may release the connection with the external electronic device (for example, the first external electronic device 220) of which the service has ended in operation 610.

The electronic device 210 may release the connection with the external electronic device (for example, the first external electronic device 220) of which the service has ended and change (or update) the number of connectable external electronic devices. According to an embodiment, the electronic device 210 may release the connection with the external electronic device (for example, the first external electronic device 220) of which the service has ended and change the number of connectable external electronic devices to a value obtained by adding one to the existing number of connectable external electronic devices.

The electronic device 210 may identify whether there is an external electronic device receiving data from the electronic device 210 in operation 611.For example, electronic device 210 may identify whether there is an external electronic device in the group (e.g. the first group 201) receiving data from the electronic device 210 in operation 611.

When there is the external electronic device receiving data from the electronic device 210 (operation 611-YES), the electronic device 210 may maintain the first group.

When there is no external electronic device receiving data from the electronic device 210 (operation 611-NO), the electronic device 210 may deactivate the data transmission mode in operation 612.

The electronic device 210 may deactivate the data transmission mode and dissolve the first group.

When the data transmission mode is not activated (operation 604-N), the electronic device 210 may identify activation of the data reception mode in operation 613.

The electronic device 210 may operate in at least one of the data transmission mode in which data is transmitted to the external electronic device or the data reception mode in which data is received from the external electronic device according to the connection with the external electronic device. The electronic device 210 may operate in the data reception mode in which data is received from at least one external electronic device (for example, the second external electronic device 230 and/or the third external electronic device 240) while operating in the data transmission mode in which data is transmitted to at least one external electronic device (for example, the first external electronic device 220). The electronic device 210 may simultaneously perform the data transmission mode and the data reception mode.

The electronic device 210 may identify whether the number of external electronic devices connected to the electronic device 210 is the same as the maximum number of external electronic devices connectable to the electronic device 210 in operation 614.

According to identification that the number of external electronic devices connectable to the electronic device 210 is the maximum number (operation 614-YES), the electronic device 210 may transmit information indicating that the connection has failed to the connectable to the external electronic device 220, 230, 240, 411, or 412. For example, the electronic device 210 may perform operation 606.

Based on that the number of external electronic devices connectable to the electronic device 210 is not the same as (e.g. less than) the maximum number of external electronic devices connectable to the electronic device 210 (operation 614-NO), the electronic device 210 may join the group generated by the external electronic device (for example, the second external electronic device 230 and/or the third external electronic device 240) as the GC and perform the service in operation 615.

The electronic device 210 may release the connection with the external electronic device (for example, the second external electronic device 230 and/or the third external electronic device 240) of which the service has been completely performed in operation 616.

The electronic device 210 may release the connection with the external electronic device (for example, the second external electronic device 230 and/or the third external electronic device 240) of which the service has ended and change (or update) the number of connectable external electronic devices. According to an embodiment, the electronic device 210 may release the connection with the external electronic device (for example, the second external electronic device 230 and/or the third external electronic device 240) of which the service has ended and change the number of connectable external electronic devices to a value obtained by adding the number of disconnected external electronic devices to the existing number of connectable external electronic devices.

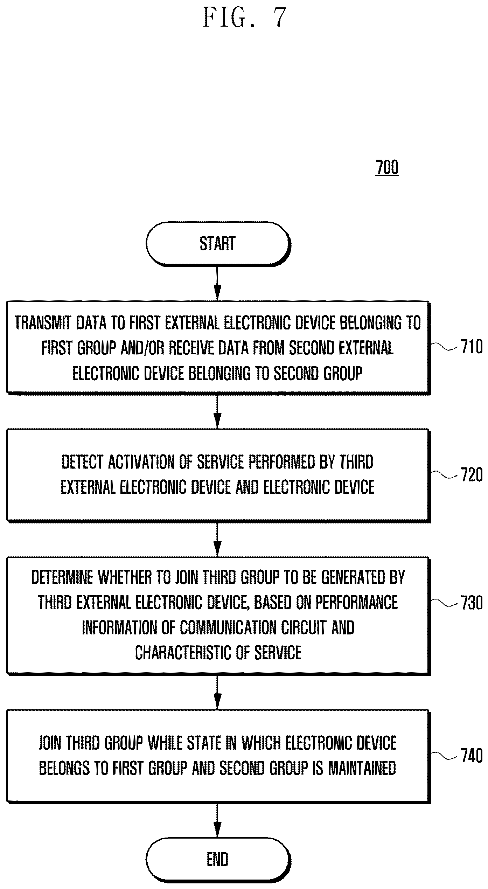

FIG. 7 is a flowchart illustrating a method 700 of operating an electronic device according to an embodiment.

An electronic device (for example, the electronic device 210 of FIG. 3) may transmit data to a first external electronic device (for example, the first external electronic device 220 of FIG. 2A) belonging to a first group (for example, the first group 201 of FIG. 2A) and receive data from a second external electronic device (for example, the second external electronic device 230 of FIG. 2A) belonging to a second group (for example, the second group 202 of FIG. 2A) in operation 710.

The electronic device 210 may detect activation of a service using short-range wireless communication between the electronic device 210 and the first external electronic device (for example, the first external electronic device 220 of FIG. 2A). The service using the short-range wireless communication may include a service in which the electronic device 210 and the first external electronic device 220 transmit and/or receive data through D2D communication. The D2D communication between the electronic device 210 and the first external electronic device 220 may include Wi-Fi direct.

As detecting the serving using the short-range wireless communication between the electronic device 210 and the first external electronic device 220, the electronic device 210 may control the communication circuit 310 to make the connection using the short-range wireless communication between the electronic device 210 and the first external electronic device 220. When or based on the electronic device 210 transmits data (or file or content) to the first external electronic device 220, the electronic device 210 may generate the first group (for example, the first group 201 of FIG. 2A) including the electronic device 210 to make the electronic device 210 operate as a group owner (GO). After generating the first group 201, the electronic device 210 may control the first external electronic device 220 to join the first group 201. The first external electronic device 220 may operate as a group client (GC) of the first group 201.

The electronic device 210 may detect activation of a service using short-range wireless communication between the electronic device 210 and a second external electronic device (for example, the second external electronic device 230 of FIG. 2A). The service using the short-range wireless communication may include a service in which the electronic device 210 and the second external electronic device 230 transmit and/or receive data through D2D communication. The D2D communication between the electronic device 210 and the second external electronic device 230 may include Wi-Fi direct.

As detecting the serving using the short-range wireless communication between the electronic device 210 and the second external electronic device 230, the electronic device 210 may control the communication circuit 310 to make the connection using the short-range wireless communication between the electronic device 210 and the second external electronic device 230. When or based on the electronic device 210 receives data (or file or content) from the second external electronic device 230, the electronic device 210 may join a second group (for example, the second group 202 of FIG. 2A) generated by the second external electronic device 230. When the electronic device 210 receives data from the second external electronic device 230, the electronic device 210 may operate as the GC, and the second external electronic device 230 may operate as the GO.

There is no limitation in the order of generation of the first group 201 by the electronic device 210 and the order of joining of the electronic device 210 in the second group 202. The electronic device 210 may join in the second group 202 after generating the first group 201 and generate the first group 201 after the electronic device 210 joins in the second group 202. The electronic device 210 may belong to both the first group 201 and the second group 202 and may operate as the GO of the first group 201 and the GC of the second group.

The electronic device 210 may control the communication circuit 310 to transmit data to the first external electronic device 220 belonging to the first group 201 and/or to receive data from the second external electronic device 230 belonging to the second group 202.

The electronic device 210 may detect activation of a service performed by a third external electronic device (for example, the third external electronic device 240 of FIG. 2B) and the electronic device 210 in operation 720.

The electronic device 210 may detect activation of the service performed by a third external electronic device (for example, the third external electronic device 240 of FIG. 2B) and the electronic device 210 while the electronic device 210 transmits data to the first external electronic device 220 belonging to the first group 201 and/or the electronic device 210 receives data from the second external electronic device 230 belonging to the second group 202.

The service performed by the third external electronic device 240 and the electronic device 210 may include a service performed using short-range wireless communication by the electronic device 210 and the third external electronic device 240. The service performed using the short-range wireless communication by the electronic device 210 and the third external electronic device 240 may be referred to as a service using data transmitted/received through a connected channel.

The electronic device 210 may detect activation of a service using short-range wireless communication between the electronic device 210 and the third external electronic device 240. According to an embodiment, the service using the short-range wireless communication may include at least one of a content (or data or file) sharing service and a multi-device environment (MED) support service. The third external electronic device 240 may transmit a connection request message to the electronic device 210 to transmit data to the electronic device 210, and the electronic device 210 may detect activation of the service using the short-range wireless communication between the electronic device 210 and the third external electronic device 240 by receiving the connection request message through various schemes (for example, short-range wireless communication or OOB short-range wireless communication different from the short-range wireless communication).

The electronic device 200 may determine whether to join a third group (for example, the third group 203 of FIG. 4B) to be generated by the third external electronic device 240, based on capability information of a communication circuit (for example, the communication circuit 310 of FIG. 3) and a characteristic of the service in operation 730.

As detecting activation of the service using short-range wireless communication between the electronic device 210 and the third external electronic device 240, the electronic device 210 may identify perform information of the communication circuit 310 and a characteristic of the service using the short-range wireless communication between the electronic device 210 and the third external electronic device 240.

The capability information of the communication circuit 310 may include the maximum number of external electronic devices (for example, the first external electronic device 210, the second external electronic device 220, and/or the third external electronic device 230) connectable to the electronic device 210 through short-range wireless communication supported by the communication circuit 310.

According to an embodiment, when the number of external electronic devices which can be connected to the electronic device 210 via the short-range wireless communication supported by the communication circuit 310 is 8, the third external electronic device 230 can be connected to the electronic device 210 via the short-range wireless communication.

According to another example, when the number of external electronic devices which can be connected to the electronic device 210 via the short-range wireless communication supported by the communication circuit 310 is 2, the third external electronic device 230 cannot be connected to the electronic device 210 via the short-range wireless communication.

The electronic device 210 may identify the capability information of the communication circuit 310 and the number of external electronic devices (for example, the first external electronic device 220 and the second external electronic device 230) connected to the electronic device 210 through short-range wireless communication according to every configured period and control the communication circuit 310 to broadcast a message including information indicating the number of external electronic devices connectable to the electronic device 210.

The characteristic of the service using the short-range wireless communication between the electronic device 210 and the third external electronic device 240 may include an operation mode for performing the service using the short-range wireless communication between the electronic device 210 and the third external electronic device 240. The operation mode in which the electronic device 210 performs the service using the short-range wireless communication between the electronic device 210 and the third external electronic device 240 may include a data transmission mode and/or a data reception mode.

According to an embodiment, the electronic device 210 may operate in the data transmission mode when transmitting data (or content or file) to the third external electronic device 240 and may operate the data reception mode when receiving data (or content or file) from the third external electronic device 240.

Based on the capability information of the communication circuit 310 and the characteristic of the service using short-range wireless communication between the electronic device 210 and the third external electronic device 240, the electronic device 210 may determine whether to join the third group (for example, the third group of FIG. 2B) to be generated by the third external electronic device 240 or the third group generated by the third external electronic device 240.

According to an embodiment, the electronic device 210 may identify that the short-range wireless communication connection between the third external electronic device 240 and the electronic device 210 is possible based on the capability information of the communication circuit 310, and determine to join the third group, based on identification of the operation in the data transmission mode in which data (or content or file) is received from the third external electronic device 240, based on the characteristic of the service.

According to an embodiment, the electronic device 210 may identify that the number of external electronic devices connected to the electronic device 210 through short-range wireless communication is smaller than the maximum number of connectable external electronic devices supported by the communication circuit 310, based on the capability information of the communication circuit 310, and determine to join the third group, based on the identification of the operation in the data reception mode in which data (or content or file) is received from the third external electronic device 240, based on the characteristic of the service.

The third group is a group in which the third external electronic device 240 operates as the group owner (GO) and may be a group that is not dissolved even through a group (for example, the second group 202) to which the electronic device 210 belongs is dissolved according to completion of data transmission to the electronic device 210 by another external electronic device (for example, the second external electronic device 230 belonging to the second group 202). Accordingly, the electronic device 210 may receive (e.g. smoothly receive) data transmitted by the third external electronic device 240 by joining the third group generated by the third external electronic device 240 transmitting data to the electronic device 210.

According to an embodiment, when the number of external electronic devices connected to the electronic device 210 through short-range wireless communication is the maximum number of connectable external electronic devices supported by the communication circuit 310, based on the capability information of the communication circuit 310, the electronic device 210 may determine to not join the third group. It is because, when the number of external electronic devices connected to the electronic device 210 through short-range wireless communication is the maximum number of connectable external electronic devices supported by the communication circuit 310, the electronic device 210 cannot be connected to the third external electronic device 240 via the short-range wireless communication.

As determining to not join the third group, the electronic device 210 may provide information indicating not to join the third group. According to an embodiment, the electronic device 210 may control the communication circuit 310 to transmit the information indicating not to join the third group to the third external electronic device 240. Alternatively, the electronic device 210 may control an entity (for example, another communication circuit (not shown)) supporting other short-range wireless communication to transmit the information indicating not to join the third group to the third external electronic device 240 through other short-range wireless communication (for example, Bluetooth). The third external electronic device 240 may receive a message including information indicating the number of external electronic devices connectable to the electronic device 210 transmitted by the electronic device 210, and when it is identified that the electronic device 210 can be connected to the third external electronic device 240 (for example, the connection between the external electronic device of the first group 201 and/or the external electronic device of the second group 202 and the electronic device 210 is released) based on the information indicating the number of external electronic devices connectable to the electronic device 210, may attempt again the connection to the electronic device 210 through short-range wireless communication.

According to an embodiment, the electronic device 210 may identify that the electronic device 210 operates in the data transmission mode in which data is transmitted to the third external electronic device 240, based on a characteristic of the service. Based on identification that the electronic device 210 operates in the data transmission mode in which data is transmitted to the third external electronic device 240, the electronic device 210 may determine to not join the third group.

The electronic device 210 may operate as the group owner (GO) of the first group 201 in order to transmit data to the first external electronic device 220. Based on identification that the electronic device 210 operates in the data transmission mode in which data is transmitted to the third external electronic device 240, the electronic device 210 may make the third external electronic device 240 join the first group 201 without joining the third group. According to joining the first group 201, the third external electronic device 240 may operate as the group client (GC) of the first group 201 and receive data from the electronic device 210 through a frequency band allocated to the first group 201. The electronic device 210 may operate as the GO of the first group 201 and, before data transmission to external electronic devices (for example, the first external electronic device 220 and/or the third external electronic device 240) operating as the GC, maintain the first group 201 (or may not dissolve the first group 201). Accordingly, the connection between the electronic device 210 and the third external electronic device 240 through short-range wireless communication may be maintained.

The electronic device 210 may join the third group 230 while the state in which the electronic device 210 belongs to the first group 201 and the second group 202 is maintained in operation 740.

As determining to join the third group, the electronic device 210 may perform a series of operations for joining the third group with the third external electronic device 240. According to an example, the electronic device 210 may receive information on the third group (for example, a frequency band of the third group, channel information, and/or identification information of the third group) from the third external electronic device 240 and join the third group, based on the information on the third group received from the third external electronic device 240. The electronic device 210 may receive data (or content or file) from the third external electronic device 240 belonging to the third group after joining the third group.

In joining the third group, the electronic device 210 may maintain the state in which the electronic device 210 belongs to the first group 201 and the second group 202. According to an embodiment, the electronic device 210 may operate as the GO of the first group 201, operate as the GC of the second group 202, and operate as the GC of the third group.

An electronic device according to an embodiment may include a communication circuit 310 configured to support short-range wireless communication. The electronic device may include memory 330 configured to store one or more computer programs. The electronic device may include at least one processor 320. The one or more computer programs may include instructions that, when executed individually or collectively by the at least one processor 320, cause the electronic device to transmit data to a first external electronic device 220 belonging to a first group 201 including the electronic device and the first external electronic device 220 via the short-range wireless communication and/or receive data from a second external electronic device 230 belonging to a second group including the electronic device and the second external electronic device 230 via the short-range wireless communication. The instructions may cause, when executed individually or collectively by the at least one processor 320, the electronic device to detect activation of a service performed by a third external electronic device 240 and the electronic device. The instructions may cause, when executed individually or collectively by the at least one processor 320, the electronic device to, based on capability information of the communication circuit 310 and a characteristic of the service, determine whether to join a third group 203 generated by the third external electronic device 240. The instructions may cause, when executed individually or collectively by the at least one processor 320, the electronic device to, based on determination to join the third group 203, join the third group 203 while a state where the electronic device belongs to the first group 201 and the second group 202 is maintained.

In the electronic device according to an embodiment, the capability information of the communication circuit 310 may include information indicating a maximum number of external electronic devices connectable to the electronic device via the short-range wireless communication and/or information indicating whether to be connectable to the electronic device via the short-range wireless communication. The instructions may cause, when executed individually or collectively by the at least one processor 320, the electronic device to, in case that a number of external electronic devices connected to the electronic device via the short-range wireless communication is smaller than the maximum number, determine to join the third group 203.

In the electronic device according to an embodiment, the instructions may cause, when executed individually or collectively by the at least one processor 320, the electronic device to determine not to join the third group 203 in case that the number of external electronic devices connected to the electronic device via the short-range wireless communication is the maximum number. The instructions may cause, when executed individually or collectively by the at least one processor 320, the electronic device to provide information indicating not to join the third group 203.

In the electronic device according to an embodiment, the instructions may cause, when executed individually or collectively by the at least one processor 320, the electronic device to, in case that the service is a service in which the third external electronic device 240 transmits data to the electronic device, determine to join the third group 203.

In the electronic device according to an embodiment, the instructions may cause, when executed individually or collectively by the at least one processor 320, the electronic device to, in case that the service is a service in which the third external electronic device 240 receives data from the electronic device, determine not to join the third group 203.

In the electronic device according to an embodiment, the instructions may cause, when executed individually or collectively by the at least one processor 320, the electronic device to make the third external electronic device 240 join the first group 201, based on determination not to join the third group 203.

In the electronic device according to an embodiment, the instructions may cause, when executed individually or collectively by the at least one processor 320, the electronic device to broadcast information indicating whether to be connectable to the electronic device and/or information indicating the number of external electronic devices connectable to the electronic device via the short-range wireless communication and/or short-range wireless communication different from the short-range wireless communication.

In the electronic device according to an embodiment, the electronic device may be configured to operate as a group owner (GO) of the first group 201, operate as a group client (GC) of the second group, and operate as a GC of the third group 203.

In the electronic device according to an embodiment, the instructions may cause, when executed individually or collectively by the at least one processor 320, the electronic device to detect activation of a service performed by a fourth external electronic device 411 and the electronic device. The instructions may cause, when executed individually or collectively by the at least one processor 320, the electronic device to determine whether to join a fourth group 401 generated by the fourth external electronic device 411, based on the capability information of the communication circuit 310 and whether the fourth external electronic device 411 performs a service in which data is transmitted to the electronic device is performed. The instructions may cause, when executed individually or collectively by the at least one processor 320, the electronic device to, based determination to join the fourth group, join the fourth group 401 while a state in which the electronic device belongs to the first group 201, the second group 202, and the third group 203 is maintained.

In the electronic device according to an embodiment, the instructions may cause, when executed individually or collectively by the at least one processor 320, the electronic device to refrain from joining the third group 203 in case that the number of external electronic devices connected to the electronic device via the short-range wireless communication is the maximum number of external electronic devices connectable to the electronic device via the short-range wireless communication. The instructions may cause, when executed individually or collectively by the at least one processor 320, the electronic device to join the third group 203 in case that a connection between another external electronic device belonging to the first group 201 and the electronic device is released.

A recording medium storing at least one program including instructions that, when executed individually or collectively by at least one processor 320 of an electronic device, cause the electronic device to perform operations may be provided. The instructions, when executed individually or collectively by the at least one processor 320, cause the electronic device to transmit data to a first external electronic device 220 belonging to a first group 201 including the electronic device and the first external electronic device 220 and/or receive data from a second external electronic device 230 belonging to a second group including the electronic device and the second external electronic device 230. The instructions may cause, when executed individually or collectively by at least one processor 320, the electronic device to detect activation of a service performed by a third external electronic device 240 and the electronic device. The instructions may cause, when executed individually or collectively by at least one processor 320, the electronic device to, based on capability information of a communication circuit 310 and a characteristic of the service, determine whether to join a third group 203 generated by the third external electronic device 240. The instructions may cause, when executed individually or collectively by at least one processor 320, the electronic device to, based on determination to join the third group 203, join the third group 203 while a state where the electronic device belongs to the first group 201 and the second group 202 is maintained.

In the recording medium according to an embodiment, the capability information of the communication circuit 310 may include information indicating a maximum number of external electronic devices connectable to the electronic device via the short-range wireless communication and/or information indicating whether to be connectable to the electronic device via the short-range wireless communication. The instructions may cause, when executed individually or collectively by the at least one processor 320, the electronic device to, in case that a number of external electronic devices connected to the electronic device via the short-range wireless communication is smaller than the maximum number, determine to join the third group 203.

In the recording medium according to an embodiment, the instructions may cause, when executed individually or collectively by the at least one processor 320, the electronic device to determine not to join the third group 203 in case that the number of external electronic devices connected to the electronic device via the short-range wireless communication is the maximum number. The instructions may cause, when executed individually or collectively by the at least one processor 320, the electronic device to provide information indicating not to join the third group 203.

In the recording medium according to an embodiment, the instructions may cause, when executed individually or collectively by the at least one processor 320, the electronic device to, in case that the service is a service in which the third external electronic device 240 transmits data to the electronic device, determine to join the third group 203.

In the recording medium according to an embodiment, the instructions may cause, when executed individually or collectively by the at least one processor 320, the electronic device to broadcast information indicating whether to be connectable to the electronic device and/or information indicating the number of external electronic devices connectable to the electronic device via the short-range wireless communication and/or short-range wireless communication different from the short-range wireless communication.

A method of operating an electronic device according to an embodiment may include an operation of transmitting data to a first external electronic device 220 belonging to a first group 201 including the electronic device and the first external electronic device 220 and/or receiving data from a second external electronic device 230 belonging to a second group including the electronic device and the second external electronic device 230. The method of operating the electronic device may include an operation of detecting activation of a service performed by a third external electronic device 240 and the electronic device. The method of operating the electronic device may include an operation of, based on capability information of the communication circuit 310 and a characteristic of the service, determining whether to join a third group 203 generated by the third external electronic device 240. The method of operating the electronic device may include an operation of, based on determination to join the third group 203, joining the third group 203 while a state where the electronic device belongs to the first group 201 and the second group 202 is maintained.

In the method of operating the electronic device according to an embodiment, the capability information of the communication circuit 310 may include information indicating a maximum number of external electronic devices connectable to the electronic device via the short-range wireless communication and/or information indicating whether to be connectable to the electronic device via the short-range wireless communication. The operation of determining whether to join the third group 203 may include an operation of determining to join the third group 203 in case that the number of external electronic devices connected to the electronic device via the short-range wireless communication is smaller than the maximum number.

In the method of operating the electronic device according to an embodiment, the operation of determining whether to join the third group 203 may include an operation of determining not to join the third group 203 in case that the number of external electronic devices connected to the electronic device via the short-range wireless communication is the maximum number. The operation of determining whether to join the third group 203 may include an operation of providing information indicating not to join the third group 203.

In the method of operating the electronic device according to an embodiment, the operation of determining whether to join the third group 203 may include an operation of determining to join the third group 203 in case that the service is a service in which the third external electronic device 240 transmits data to the electronic device.

The method of operating the electronic device according to an embodiment may further include an operation of broadcasting information indicating whether to be connectable to the electronic device and/or information indicating the number of external electronic devices connectable to the electronic device via the short-range wireless communication and/or short-range wireless communication different from the short-range wireless communication. The present disclosure also includes examples according to the following numbered Paragraphs:
Paragraph 1. An electronic device comprising: a communication circuit configured to support short-range wireless communication; memory configured to store at least one computer program; and at least one processor, wherein a first group includes the electronic device and a first external electronic device, and a second group includes the electronic device and a second external electronic device; and wherein the at least one computer program comprise instructions that, when executed individually or collectively by the at least processor, cause the electronic device to: transmit, via the communication circuit, first data to the first external electronic device and/or receive, via the communication circuit, second data from the second external electronic device; detect activation of a service performable by a third external electronic device and the electronic device; and based on capability information of the communication circuit and characteristics of the service, determine whether to join a third group generated by the third external electronic device while maintaining a state in which the electronic device belongs to the first group and the second group.
Paragraph 2. The electronic device of Paragraph 1, wherein the instructions, when executed individually or collectively by the at least one processor, cause the electronic device to: based on determining to join the third group, join the third group while the electronic device maintains a state in which the electronic device belongs to the first group and the second group.
Paragraph 3. The electronic device of Paragraph 1 or Paragraph 2, wherein the capability information of the communication circuit comprises information indicating a maximum number of external electronic devices connectable to the electronic device via the short-range wireless communication and/or information indicating whether to be connectable to the electronic device via the short-range wireless communication.
Paragraph 4. The electronic device of Paragraph 3, wherein the instructions, when executed individually or collectively by the at least one processors, cause the electronic device to: in case that a number of external electronic devices connected to the electronic device via the short-range wireless communication is less than the maximum number, determine to join the third group; and/or in case that the number of external electronic devices connected to the electronic device via the short-range wireless communication is the maximum number, determine not to join the third group, and transmit information indicating not to join the third group.
Paragraph 5. The electronic device of any one of Paragraphs 3 to 4, wherein the instructions, when executed individually or collectively by the at least one processor, cause the electronic device to: in case that a number of external electronic devices connected to the electronic device via the short-range wireless communication is the maximum number of external electronic devices connectable to the electronic device via the short-range wireless communication, refrain from joining the third group; and in case that a connection between another external electronic device belonging to the first group and the electronic device is released, join the third group.
Paragraph 6. The electronic device of any one of Paragraphs 1 to 5, wherein the instructions, when executed individually or collectively by the at least one processor, cause the electronic device to: in case that the service is a service through which the third external electronic device transmits data to the electronic device, determine to join the third group; and/or in case that the service is a service through which the third external electronic device receives data from the electronic device, determine not to join the third group.
Paragraph 7. The electronic device of any one of Paragraphs 1 to 6, wherein the instructions, when executed individually or collectively by the at least one processor, cause the electronic device to: based on determining not to join the third group, cause the third external electronic device to join the first group.
Paragraph 8. The electronic device of any one of Paragraphs 1 to 7, wherein the instructions, when executed individually or collectively by the at least one processor, cause the electronic device to: broadcast, via the short-range wireless communication and/or different short-range wireless communication, information indicating whether the electronic device is in a connectable state and/or information indicating the number of external electronic devices connectable to the electronic device.
Paragraph 9. The electronic device of Paragraphs 1 to 8, wherein the electronic device is configured to operate as a group owner (GO) of the first group, operate as a group client (GC) of the second group, and operate as a GC of the third group in a case that the electronic device joins the third group.
Paragraph 10. The electronic device of Paragraphs 1 to 9, wherein the instructions, when executed individually or collectively by the at least one processor, cause the electronic device to: detect activation of a service performable by a fourth external electronic device and the electronic device; based on the capability information of the communication circuit and whether the fourth external electronic device performs a service through which the fourth external electronic device transmits data to the electronic device, determine whether to join a fourth group generated by the fourth external electronic device; and based on determining to join the fourth group, join the fourth group while the electronic device maintains a state in which the electronic device belongs to the first group and the second group.
Paragraph 11. A method of operating an electronic device, the method comprising: transmitting, via a communication circuit configured to support short-range wireless communication, first data to a first external electronic device and/or receive second data from a second external electronic device, wherein a first group includes the electronic device and the first external electronic device, and a second group includes the electronic device and the second external electronic device; detecting activation of a service performable by a third external electronic device and the electronic device; and based on capability information of the communication circuit and characteristics of the service, determining whether to join a third group generated by the third external electronic device while maintaining a state in which the electronic device belongs to the first group and the second group.
Paragraph 12. The method of Paragraph 11, wherein the capability information of the communication circuit comprises information indicating a maximum number of external electronic devices connectable to the electronic device via the short-range wireless communication and/or information indicating whether to be connectable to the electronic device via the short-range wireless communication.
Paragraph 13. The method of Paragraph 12, further comprising: in case that a number of external electronic devices connected to the electronic device via the short-range wireless communication is less than the maximum number, determine to join the third group; in case that the number of external electronic devices connected to the electronic device via the short-range wireless communication is the maximum number, determine not to join the third group; in case that the service is a service in which the third external electronic device transmits data to the electronic device, determine to join the third group; in case that the service is a service through which the third external electronic device receives data from the electronic device, determine not to join the third group; and/or in case that a number of external electronic devices connected to the electronic device via the short-range wireless communication is the maximum number of external electronic devices connectable to the electronic device via the short-range wireless communication, refrain from joining the third group, in case that a connection between another external electronic device belonging to the first group and the electronic device is released, join the third group.
Paragraph 14. The method of any one of Paragraphs 11 to 13, further comprising: broadcasting, via the short-range wireless communication and/or different short-range wireless communication, information indicating whether to be connectable to the electronic device and/or information indicating the number of external electronic devices connectable to the electronic device
Paragraph 15. A recording medium storing at least one program comprising instructions that, when executed individually or collectively by at least one processor of an electronic device, cause the electronic device to perform the method of any one of Paragraphs 11 to 14.

## Claims

1. An electronic device comprising:
a communication circuit configured to support short-range wireless communication;
memory configured to store at least one computer program; and
at least one processor,
wherein the at least one computer program comprise instructions that, when executed individually or collectively by the at least processor, cause the electronic device to:
transmit first data to a first external electronic device belonging to a first group including the electronic device and the first external electronic device via the short-range wireless communication and/or receive second data from a second external electronic device belonging to a second group including the electronic device and the second external electronic device via the short-range wireless communication;
detect activation of a service performable by a third external electronic device and the electronic device;
based on capability information of the communication circuit and characteristics of the service, determine whether to join a third group generated by the third external electronic device; and
based on determination to join the third group, join the third group while the electronic device maintains a state in which the electronic device belongs to the first group and the second group.

2. The electronic device of claim 1, wherein the capability information of the communication circuit comprises information indicating a maximum number of external electronic devices connectable to the electronic device via the short-range wireless communication and/or information indicating whether to be connectable to the electronic device via the short-range wireless communication.

3. The electronic device of claims 1 to 2, wherein the instructions, when executed individually or collectively by the at least one processors, cause the electronic device to:
in case that a number of external electronic devices connected to the electronic device via the short-range wireless communication is less than the maximum number, determine to join the third group; and/or
in case that the number of external electronic devices connected to the electronic device via the short-range wireless communication is the maximum number, determine not to join the third group, and transmit information indicating not to join the third group.

4. The electronic device of claim 3, wherein the instructions, when executed individually or collectively by the at least one processor, cause the electronic device to:
in case that a number of external electronic devices connected to the electronic device via the short-range wireless communication is the maximum number of external electronic devices connectable to the electronic device via the short-range wireless communication, refrain from joining the third group; and
in case that a connection between another external electronic device belonging to the first group and the electronic device is released, join the third group.

5. The electronic device of any one of claims 1 to 5, wherein the instructions, when executed individually or collectively by the at least one processor, cause the electronic device to:
in case that the service is a service through which the third external electronic device transmits data to the electronic device, determine to join the third group; and/or
in case that the service is a service through which the third external electronic device receives data from the electronic device, determine not to join the third group.

6. The electronic device of any one of claims 1 to 5, wherein the instructions, when executed individually or collectively by the at least one processor, cause the electronic device to:
based on determining not to join the third group, cause the third external electronic device to join the first group.

7. The electronic device of any one of claims 1 to 6, wherein the instructions, when executed individually or collectively by the at least one processor, cause the electronic device to:
broadcast, via the short-range wireless communication and/or different short-range wireless communication, information indicating whether the electronic device is in a connectable state and/or information indicating the number of external electronic devices connectable to the electronic device.

8. The electronic device of any one of claims 1 to 7, wherein the electronic device is configured to operate as a group owner (GO) of the first group, operate as a group client (GC) of the second group, and operate as a GC of the third group in a case that the electronic device joins the third group.

9. The electronic device of any one of claims 1 to 8, wherein the instructions, when executed individually or collectively by the at least one processor, cause the electronic device to:
detect activation of a service performable by a fourth external electronic device and the electronic device;
based on the capability information of the communication circuit and whether the fourth external electronic device performs a service through which the fourth external electronic device transmits data to the electronic device, determine whether to join a fourth group generated by the fourth external electronic device; and
based on determining to join the fourth group, join the fourth group while the electronic device maintains a state in which the electronic device belongs to the first group and the second group, and the third group.

10. A method of operating an electronic device, the method comprising:
transmitting, via a communication circuit configured to support short-range wireless communication, first data to a first external electronic device and/or receive second data from a second external electronic device, wherein a first group includes the electronic device and the first external electronic device, and a second group includes the electronic device and the second external electronic device;
detecting activation of a service performable by a third external electronic device and the electronic device; and
based on capability information of the communication circuit and characteristics of the service, determining whether to join a third group generated by the third external electronic device; and
based on determination to join the third group, joining the third group while the electronic device maintains a state in which the electronic device belongs to the first group and the second group.

11. The method of claim 10, wherein the capability information of the communication circuit comprises information indicating a maximum number of external electronic devices connectable to the electronic device via the short-range wireless communication and/or information indicating whether to be connectable to the electronic device via the short-range wireless communication.

12. The method of any one of claims 10 and 11, further comprising:
in case that a number of external electronic devices connected to the electronic device via the short-range wireless communication is less than the maximum number, determining to join the third group;
in case that the number of external electronic devices connected to the electronic device via the short-range wireless communication is the maximum number, determining not to join the third group.

13. The method of any one of claims 10 to 12, further comprising:
broadcasting, via the short-range wireless communication and/or different short-range wireless communication, information indicating whether to be connectable to the electronic device and/or information indicating the number of external electronic devices connectable to the electronic device.

14. A recording medium storing at least one program comprising instructions that, when executed individually or collectively by at least one processor of an electronic device, cause the electronic device to perform the method of any one of claims 10 to 13.
